# EUROPEAN PATENT SPECIFICATION

(11) **EP 4 425 893 B1**
(45) Date of publication and mention of the grant of the patent: **15.04.2026**
(21) Application number: 22885196.0
(22) Date of filing: 08.07.2022
(51) Int. Cl.: H04L 67/125, H04N 23/00, H04L 9/40, H04W 12/08

(54) **METHOD FOR CONTROLLING APPLICATION TERMINAL, AND APPLICATION TERMINAL, STORAGE MEDIUM AND CAMERA**
VERFAHREN ZUR STEUERUNG EINES ANWENDUNGSENDGERÄTS UND ANWENDUNGSENDGERÄT, SPEICHERMEDIUM UND KAMERA
PROCÉDÉ DE COMMANDE DE TERMINAL D'APPLICATION, ET TERMINAL D'APPLICATION, SUPPORT DE STOCKAGE ET CAMÉRA

(30) Priority: 29.10.2021 CN 202111275547
(43) Date of publication of application: 04.09.2024
(73) Proprietor: BOE Technology Group Co., Ltd., Chaoyang District, Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); CHEN, Shaobei, Beijing 100176 (CN); FENG, Hongbo, Beijing 100176 (CN)
(74) Representative: Durán-Corretjer, S.L.P.
(86) International application number: PCT/CN2022/104700
(87) International publication number: WO 2023/071292

(56) References cited:
- CN-A- 108 600 590
- CN-A- 111 639 334
- CN-A- 111 901 567
- CN-A- 111 917 981
- CN-U- 213 461 899
- JP-A- 2002 156 464
- US-A1- 2019 373 141

## Description

### Technical Field

The embodiment of the present disclosure relates to, but is not limited to, the field of electronic products, in particular to a method for controlling an application terminal, an application terminal, a storage medium and a camera.

### Background

With the development of Internet of Things and mobile Internet technology, the types and functions of the application terminal have been greatly improved. In the era of Internet of Everything, application terminals usually have the function of network connection, and can be connected anytime and anywhere through the Internet of Things, and another device (for example, a mobile terminal) can be remotely connected to application terminals by wired or wireless means, thus achieving remote control, remote management and other functions. At present, application terminals usually support a variety of working modes, but the adjustment of different modes needs to be manually adjusted by users, which requires manual participation and has a low level of automation. Related technologies include CN111901567A and CN111917981A.

CN111901567A discloses a privacy protection method, and relates to the technical field of safety monitoring. The privacy protection method comprises the following steps of: when detecting that dynamic targets exist in a monitoring area, obtaining first biological information of the dynamic targets; matching the first biological information with second biological information of a preset white list, and judging whether the dynamic targets are all white list members or not according to a matching result; and if the dynamic targets are white list members, controlling a camera to start a privacy protection mode. The invention further discloses a privacy protection device, equipment and a computer readable storage medium. Personal privacy can be protected, and the information security of a smart home camera is improved.

CN1111917981A discloses a privacy protection method, and relates to the technical field of safety monitoring. The privacy protection method comprises the following steps: judging whether a user is ina preset area or not according to a preset mode; if the user is in the preset area, switching the working mode of the camera into a privacy protection mode; if the user is not in the preset area, switching the working mode of the camera into a non-public mode, sending request information about whether the camera is public or not to the user terminal, and switching the working mode into a public mode when a public control instruction sent by the user terminal based on the request information is received. The invention further discloses a privacy protection device and equipment and a computer readable storage medium. According to the invention, the personal privacy of the user can be protected, and the information security of the smart home camera is improved.

### Summary

In a first aspect, the embodiment of the present disclosure provides a method for controlling an application terminal according to the independent claims, further embodiments and improvements are provided in the dependent claims, the application terminal includes: when a working mode of an application terminal is a first mode, acquiring target information; determining whether the working mode of the application terminal meets a preset switching condition on the basis of the target information; and if the working mode of the application terminal meets the preset switching condition, controlling the working mode of the application terminal to switch from the first mode to a second mode, which is different from the first mode, wherein the working mode includes any one or more of a terminal form, a networking mode and a running function.

In a second aspect, the embodiment of the present disclosure provides an application terminal including: a processor and a memory storing a computer program that is runnable on the processor, wherein acts of the method of controlling the application terminal described in the above embodiments are implemented when the processor executes the program.

In a third aspect, an embodiment of the present disclosure provides a computer-readable storage medium including a stored program, wherein a device on which the storage medium is located is controlled to execute acts of the method of controlling an application terminal described in the above embodiments when the program is run.

In a fourth aspect, the embodiment of the present disclosure provides a camera including a housing, a camera body, and a telescopic component, wherein, the housing has an accommodating cavity and a first opening, wherein the accommodating cavity is configured to accommodate the camera body and the telescopic component, and the first opening is arranged above the housing; the camera body is connected with the telescopic component; the telescopic component has an extended state and a contracted state, wherein the telescopic component is configured to extend the camera body out of the housing from the first opening for shooting when in the extended state; alternatively, retract the camera body into the accommodating cavity from the first opening when in the contracted state.

In a fifth aspect, the embodiment of the present disclosure provides an application terminal, including a camera described in the above embodiment.

Other characteristics and advantages of the present disclosure will be set forth in the following specification, and moreover, partially become apparent from the specification or are understood by implementing the present disclosure. Other advantages of the present disclosure may be achieved and obtained through solutions described in the specification and drawings.

Other aspects may be understood upon reading and understanding the drawings and detailed description.

### Brief Description of Drawings

Accompanying drawings are used for providing understanding of technical solutions of the present disclosure, and form a part of the specification. They are used for explaining the technical solutions of the present disclosure together with the embodiments of the present disclosure, but do not form a limitation on the technical solutions of the present disclosure. Shapes and sizes of components in the drawings do not reflect actual scales, and are only intended to schematically illustrate contents of the present disclosure.
FIG. 1A is a schematic diagram of a structure of a system for controlling an application terminal in an exemplary embodiment of the present disclosure;
FIG. 1B is a schematic diagram of another structure of a system for controlling an application terminal in an exemplary embodiment of the present disclosure;
FIG. 2 is a schematic diagram of a first flow of a method for controlling an application terminal in an exemplary embodiment of the present disclosure;
FIG. 3A is a schematic diagram of a second flow of a method for controlling an application terminal in an exemplary embodiment of the present disclosure;
FIG. 3B is a schematic diagram of a third flow of a method for controlling an application terminal in an exemplary embodiment of the present disclosure;
FIG. 3C is a schematic diagram of a fourth flow of a method for controlling an application terminal in an exemplary embodiment of the present disclosure;
FIG. 4A is a schematic diagram of a fifth flow of a method for controlling an application terminal in an exemplary embodiment of the present disclosure;
FIG. 4B is a schematic diagram of a sixth flow of a method for controlling an application terminal in an exemplary embodiment of the present disclosure;
FIG. 4C is a schematic diagram of a seventh flow of a method for controlling an application terminal in an exemplary embodiment of the present disclosure;
FIG. 5 is a schematic diagram of an eighth flow of a method for controlling an application terminal in an exemplary embodiment of the present disclosure;
FIG. 6 is a schematic diagram of a ninth flow of a method for controlling an application terminal in an exemplary embodiment of the present disclosure;
FIG. 7A is a schematic diagram of a networking mode of an application terminal in an exemplary embodiment of the present disclosure;
FIG. 7B is a schematic diagram of another networking mode of an application terminal in an exemplary embodiment of the present disclosure;
FIG. 8 is a schematic diagram of a tenth flow of a method for controlling an application terminal in an exemplary embodiment of the present disclosure;
FIG. 9 is a schematic diagram of a flow of a first application scenario of a method for controlling an application terminal in an exemplary embodiment of the present disclosure;
FIG. 10 is a schematic diagram of a flow of a second application scenario of a method for controlling an application terminal in an exemplary embodiment of the present disclosure;
FIG. 11A is a schematic diagram of a first structure of a camera in an exemplary embodiment of the present disclosure;
FIG. 11B is a schematic diagram of a second structure of a camera in an exemplary embodiment of the present disclosure;
FIG. 11C is a schematic diagram of a third structure of a camera in an exemplary embodiment of the present disclosure;
FIG. 11D is a schematic diagram of a fourth structure of a camera in an exemplary embodiment of the present disclosure;
FIG. 11E is a schematic diagram of a fifth structure of a camera in an exemplary embodiment of the present disclosure;
FIG. 12 is a schematic diagram of a structure of an application terminal in an exemplary embodiment of the present disclosure.

### Detailed Description

The invention is set out in the appended set of claims.

Unless otherwise defined, technical terms or scientific terms used in the embodiments shall have common meanings understood by people with ordinary skills in the field to which the present disclosure pertains. "First", "second", and similar terms used in the embodiments of the present disclosure do not represent any order, quantity, or importance, but are only used for distinguishing different components. "Include", "contain", or a similar term means that an element or object appearing before the term covers an element or object and equivalent thereof listed after the term and does not exclude other elements or objects. "Connect", "join", or a similar term is not limited to a physical or mechanical connection, but may include an electrical connection, whether direct or indirect.

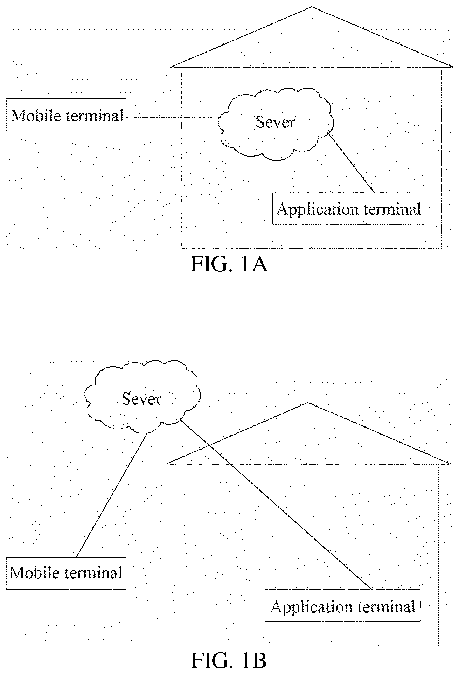

FIG. 1A is a schematic diagram of a structure of a system for controlling an application terminal in an exemplary embodiment of the present disclosure, and FIG. 1B is a schematic diagram of another structure of a system for controlling an application terminal in an exemplary embodiment of the present disclosure, wherein FIG. 1A is illustrated by taking a connection manner in which a server is located locally as an example, and FIG. 1B is illustrated by taking a connection manner in which a server is located remotely as an example. As shown in FIGS. 1A and 1B, a communication connection between at least one mobile terminal and at least one application terminal can be achieved through a server.

In an exemplary embodiment, a mobile terminal may refer to any electronic device capable of establishing a connection with an application terminal. For example, the mobile terminal may include, but is not limited to, a mobile phone, a tablet computer, an e-reader (e-book reader), a personal digital assistant (PDA), a smart bracelet, a smart watch, smart glasses, or a smart car. Here, no limitation is made thereto in embodiments of the present disclosure.

In an exemplary embodiment, an application terminal may refer to any electronic device with a network connection. For example, the application terminal may include, but is not limited to, a camera, an air conditioner, a washing machine, a refrigerator, an electric light, a television, a telephone, a rice cooker, a personal computer (PC), a workstation or other server, etc. Here, no limitation is made thereto in embodiments of the present disclosure.

A method for controlling an application terminal in the embodiment of the present disclosure will be described below in connection with the above system for controlling an application terminal.

Embodiments of the present disclosure provide a method for controlling an application terminal.

In an exemplary embodiment, the method for controlling an application terminal may be applied to an apparatus for controlling an application terminal. For example, the apparatus for controlling the application terminal may be provided in an application terminal, a server, a gateway or the like. Here, no limitation is made thereto in embodiments of the present disclosure.

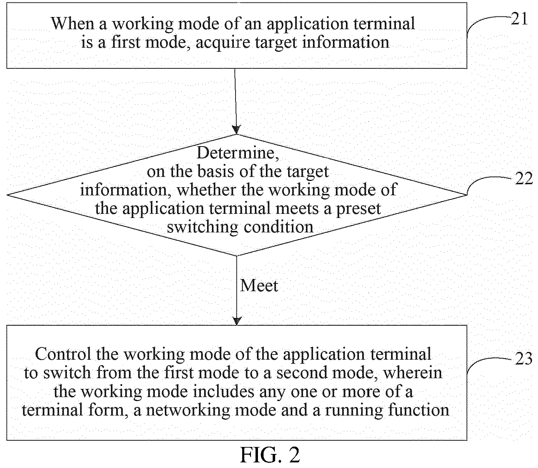

FIG. 2 is a schematic diagram of a first flow of a method for controlling an application terminal in an exemplary embodiment of the present disclosure. As shown in FIG. 2, the method for controlling an application terminal may include following acts.
Act 21: acquiring target information when a working mode of an application terminal is a first mode;
Act 22: determining whether the working mode of the application terminal meets a preset switching condition on the basis of the target information;
Act 23: if the working mode of the application terminal meets the preset switching condition, controlling the working mode of the application terminal to switch from the first mode to a second mode different from the first mode, and the working mode includes any one or more of a terminal form, a networking mode and a running function.

Therefore, without manual participation, the automatic switching of the working mode of the application terminal can be achieved based on the target information, the automation level and the intelligence level can be improved, and the user experience can be improved.

In an exemplary embodiment, the target information may refer to information that can be used to determine the working mode of the application terminal. For example, the target information may include, but are not limited to, any one or more of first information of at least one mobile terminal connected to the application terminal and second information acquired by the application terminal. Here, no limitation is made thereto in embodiments of the present disclosure.

In an exemplary embodiment, the at least one mobile terminal connected to the application terminal may be an electronic device connected to the application terminal through a local area network, a short-range communication scheme, or a long-range communication scheme. for example, the short-range communication scheme may include, but are not limited to, Wireless Fidelity Direct (WiFi) protocol, Bluetooth protocol, ZigBee protocol, etc. For example, the long-range communication scheme may include, but are not limited to, 4th Generation Mobile Communication Technology (4G), 5th Generation Mobile Communication Technology (5G), or 6th Generation Mobile Communication Technology (6G), etc. Here, no limitation is made thereto in embodiments of the present disclosure.

In an exemplary embodiment, the first information may include, but is not limited to, any one or more of identification information of at least one mobile terminal, position information of at least one mobile terminal, and distance information between at least one mobile terminal and an application terminal. For example, the identification information of the mobile terminal may include, but is not limited to, any one or more of a terminal name, a device identification, a Media Access Control (MAC) address, and a Universal Unique Identifier (UUID). for example, taking the mobile terminal as a mobile phone as an example, the universal unique identifier can refer to International Mobile Equipment Identity (IMEI), which can also be called the mobile phone serial number, and is used to identify each independent mobile communication device such as mobile phone in the mobile phone network. Here, no limitation is made thereto in embodiments of the present disclosure.

In an exemplary embodiment, the second information may include, but is not limited to, any one or more of image information of the environment in which the application terminal is located and state information of the user. For example, the state information of the user may include, but are not limited to, any one or more of position information of the user, physiological information of the user and action information of the user. For example, the physiological information of the user may include, but are not limited to, the user's heart rate, the user's pulse, the user's blood pressure or the user's movement speed or the like. Here, no limitation is made thereto in embodiments of the present disclosure.

In an exemplary embodiment, the way to acquire the second information may be: the application terminal collects the second information, for example, the application terminal collects image information of the environment in which the application terminal is located or image information of a user through the camera in the application terminal. Alternatively, the way to acquire the second information may be: other device such as a mobile terminal or a sensor connected with the application terminal collects the second information, and the application terminal receives the second information collected by the other device such as the mobile terminal or the sensor through a network, for example, the application terminal receives the image information of the environment where the application terminal is located collected by the camera in the mobile terminal, the application terminal receives the position information of the user collected by a positioning apparatus in the mobile terminal, the application terminal receives the physiological information of the user collected by the sensor in the mobile terminal, or the application terminal receives the action information of the user collected by the sensor in the mobile terminal, etc. Here, no limitation is made thereto in embodiments of the present disclosure.

The following explains how to switch the working mode of the application terminal with different application scenarios.

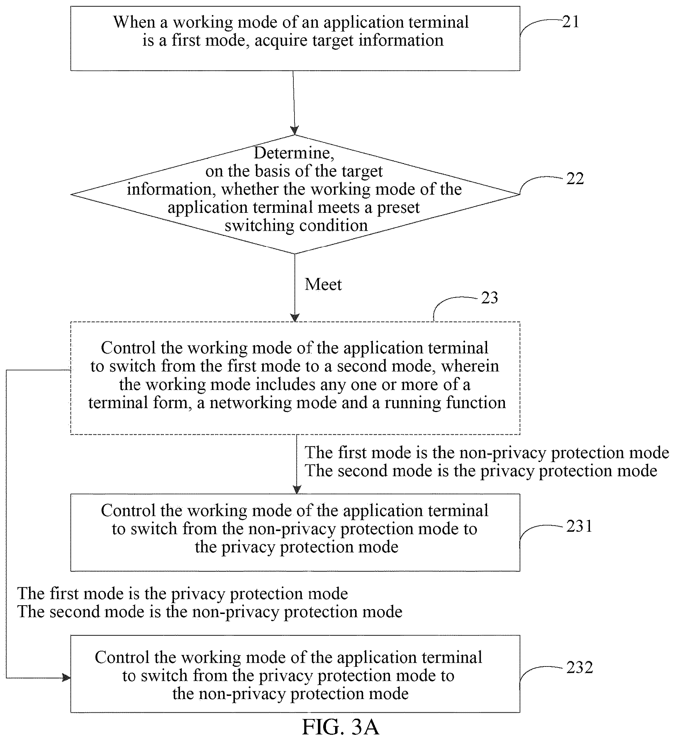

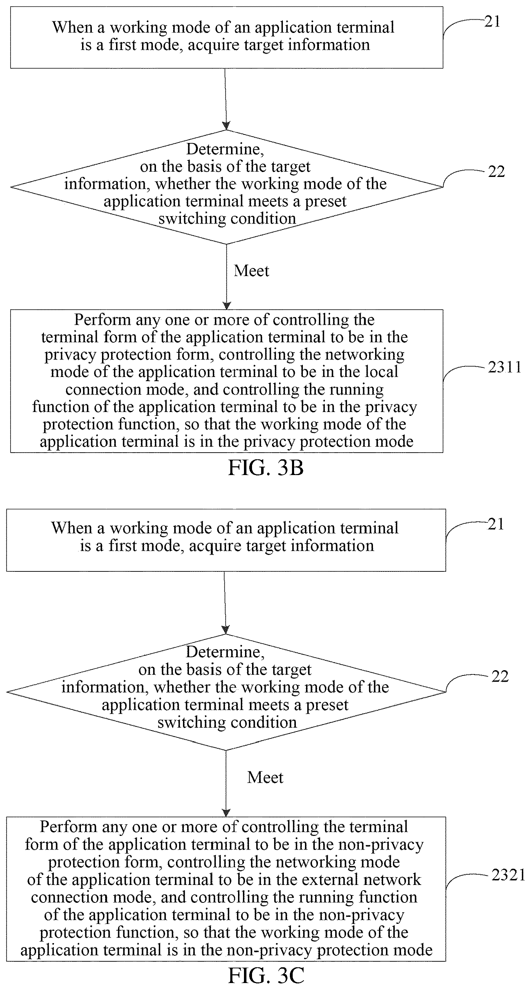

By taking a case that the working mode of the application terminal includes a non-privacy protection mode and a privacy protection mode as an example, how to switch the working modes of the application terminal is explained below. FIG. 3A is a schematic diagram of a second flow of a method for controlling an application terminal in an exemplary embodiment of the present disclosure, FIG. 3B is a schematic diagram of a third flow of a method for controlling an application terminal in an exemplary embodiment of the present disclosure, and FIG. 3C is a schematic diagram of a fourth flow of a method for controlling an application terminal in an exemplary embodiment of the present disclosure

In an exemplary embodiment, the first mode may be one of the non-privacy protection mode and the privacy protection mode, and the second mode may be another of the non-privacy protection mode and the privacy protection mode, wherein the privacy protection mode has a higher level of privacy security than the non-privacy protection mode. as shown in FIG. 3A, if the working mode of the application terminal meets the preset switching condition, act 23 may include: act 231: controlling the working mode of the application terminal to switch from the non-privacy protection mode to the privacy protection mode; alternatively, act 232: controlling the working mode of the application terminal to switch from the privacy protection mode to the non-privacy protection mode.

In an exemplary embodiment, the terminal form of the application terminal may include a privacy protection form and a non-privacy protection form, the networking mode of the application terminal may include an external network connection mode and a local connection mode, and the running function of the application terminal may include a privacy protection function and a non-privacy protection function. Then, as shown in FIG. 3B, act 231 may include: act 2311: any one or more of controlling the terminal form of the application terminal to be in the privacy protection form, controlling the networking mode of the application terminal to be in the local connection mode, and controlling the running function of the application terminal to be in the privacy protection function are performed. In this way, the working mode of the application terminal can be in the privacy protection mode. Alternatively, as shown in FIG. 3C, act 232 may include: act 2321: any one or more of controlling the terminal form of the application terminal to be in the non-privacy protection form, controlling the networking mode of the application terminal to be in the external network connection mode, and controlling the running function of the application terminal to be in the non-privacy protection function are performed. In this way, the working mode of the application terminal can be in the non-privacy protection mode.

In an exemplary embodiment, relatively speaking, the risk of user data being leaked is lower in the privacy protection form and higher in the non-privacy protection form. In the local connection mode, the risk of user data being leaked is lower, while in the external network connection mode, the risk of user data being leaked is higher. Under the privacy protection function, the risk of user data being leaked is lower, while in the non-privacy protection function, the risk of user data being leaked is higher.

In an exemplary embodiment, taking a case that the application terminal includes a camera and the camera may include a housing, a camera body, and a telescopic component as an example, the non-privacy protection form may refer to a form in which the telescopic component is in an extended state and at least a portion of the camera body is located outside the housing, and the privacy protection form may refer to a form in which the telescopic component is in a contracted state and the camera body is located inside the housing.

In an exemplary embodiment, taking a case that the application terminal includes a camera and the camera may include a color changeable component as an example, the color of the color changeable component is the same as the color of the surrounding environment of the camera (e.g., the surrounding wall) in the non-privacy protection form, and the color of the color changeable component is the same as the color of the surrounding environment of the camera in the privacy protection form. Alternatively, the color of the color changeable component is different from the color of the surrounding environment of the camera in the non-privacy protection form, and the color of the color changeable component is the same as the color of the surrounding environment of the camera in the privacy protection form. In this way, by setting the color of the camera to be the same as that of the surrounding environment (such as the surrounding wall) in the privacy protection form, the camera can be in a relatively hidden state without special attention from users.

In an exemplary embodiment, taking the application terminal including a camera as an example, the non-privacy protection form may include, but is not limited to, the protective cover is closed, the camera body extends out of the housing, the camera body is located in the housing and monitors from the second opening, or the color of the camera is different from the color of the surrounding wall, etc. The privacy protection form may include, but is not limited to: the protective cover is opened, the camera body is located in the housing while the second opening is in a closed state, the camera body is located in the housing and there is no second opening in the housing, the camera body is located in the housing and rotates so that the camera body is not aligned with the second opening, or the color of the camera is the same as that of the surrounding wall, etc. Here, no limitation is made thereto in embodiments of the present disclosure.

In an exemplary embodiment, taking the application terminal including a camera as an example, the privacy protection function may include, but is not limited to, a hibernation function, a fitness assistance function, an entertainment interaction function or an escort function, etc. Alternatively, non-privacy protection function may include, but are not limited to, monitoring functions, etc. Here, no limitation is made thereto in embodiments of the present disclosure.

In an exemplary embodiment, the terminal form of the application terminal may be different depending on the difference of the running function of the application terminal.

For example, taking the application terminal including a camera as an example, when the running function of the application terminal is in the privacy protection function, for example, the hibernation function, the privacy protection form of the application terminal can correspond to opening the protection cover, so that the lens of the camera does not collect images, in this way, when the running function of the application terminal adopts the hibernation function, the risk of privacy leakage can be better avoided and the user experience can be improved. Alternatively, the privacy protection form of the application terminal can correspond to that the camera body is located in the housing while the second opening is in a closed state, the camera body is located in the housing and there is no second opening in the housing, or the camera body is located in the housing and the camera body is rotated so that the camera body is not aligned with the second opening, the camera body is located in the housing and there is no second opening in the housing, or the camera body is located in the housing and the camera body is rotated so that the camera body is not aligned with the second opening, in this way, the volume of the application terminal can be reduced, the visual influence on the user can be reduced, the aesthetic level of the application terminal can be improved, dust can be prevented, and the user experience can be improved. Here, no limitation is made thereto in embodiments of the present disclosure, and it may be set by those skilled in the art or users according to an application scenario.

For another example, taking the application terminal including a camera as an example, when the running function of the application terminal is in a privacy protection function, such as a fitness assistance function, an entertainment interaction function or an escort function, the privacy protection form of the application terminal can correspond to closing the protection cover, so that the camera can better interact with the user and the user experience can be improved. Alternatively, the privacy protection form of the application terminal can correspond to the camera body extending out of the housing, so that it is easy for the camera to rotate or easy for the user to align the lens, which can better provide interactive services and improve the user experience. In addition, the camera body extends out of the housing, which makes the camera more vivid and enhances the interactive experience. Alternatively, the privacy protection form of the application terminal can correspond to the camera body being located in the housing and shooting through the second opening opened in the housing, so that the interactive manner of the camera can be enriched and the user experience can be improved. Alternatively, the privacy protection form of the application terminal can correspond to the color of the camera being different from the color of the surrounding wall, for example, the color of the camera can be the user's preferred color or eye-catching color, etc., so that interactive services can be better provided and the user experience can be improved. Alternatively, the privacy protection form of the application terminal can correspond to the color of the camera being same as the color of the wall. At this time, the surrounding colors are relatively uniform, which can improve the aesthetics and can enhance the user experience. Here, no limitation is made thereto in embodiments of the present disclosure, and it may be set by those skilled in the art or users according to an application scenario.

For another example, taking the application terminal including a camera as an example, when the running function of the application terminal is in a non-privacy protection function, for example, a monitoring function, the non-privacy protection form of the application terminal can correspond to opening the protective cover, so that the camera can work normally. Alternatively, the non-privacy protection form of the application terminal can correspond to the camera body being located in the housing and shooting from the second opening opened from the housing, so that the overall volume of the camera is smaller, better concealment effect can be achieved, and the influence on the monitored object can be reduced. Alternatively, the non-privacy protection form of the application terminal can correspond to the camera body extending out of the housing for shooting, which can facilitate the monitored object to know that it is currently in a non-privacy protection state. Alternatively, the non-privacy protection form of the application terminal can correspond to the color of the camera being different from the color of the surrounding wall, which can facilitate the monitored object to know that it is currently in a non-privacy protection state. Alternatively, the non-privacy protection form of the application terminal can correspond to the color of the camera being same as the color of the surrounding wall, so that the camera can be in a relatively hidden state, which can play a better concealment effect and reduce the influence on the monitored object.

In an exemplary embodiment, the external network connection mode may refer to the use of a star network. Alternatively, the local connection mode may refer to the use of a mesh (MESH) network. Here, no limitation is made thereto in embodiments of the present disclosure.

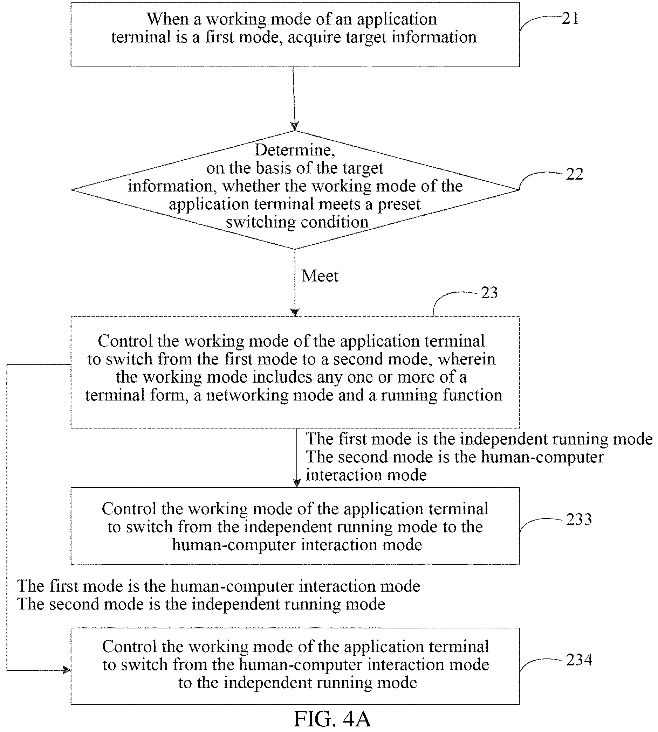

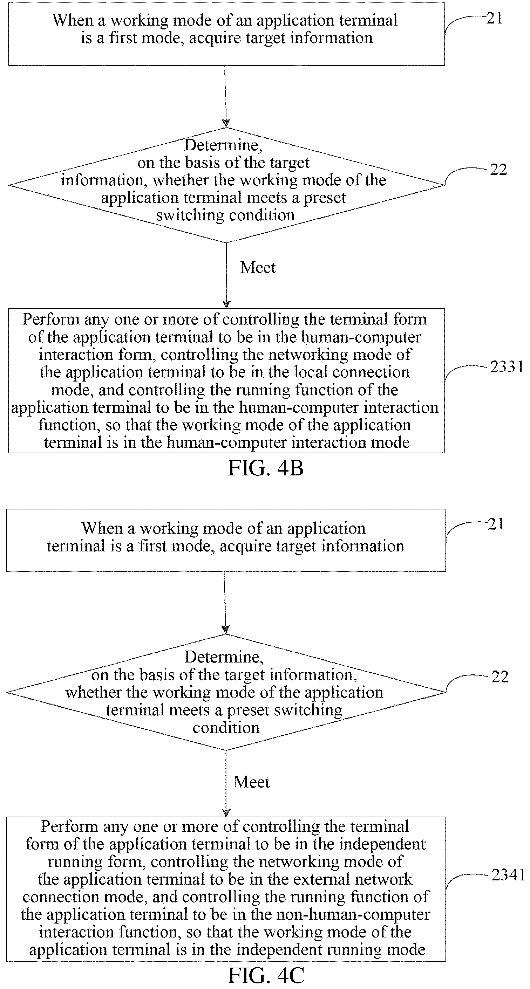

Taking the working modes of the application terminal including an independent running mode and a human-computer interaction mode as an example, how to switch the working modes of the application terminal is explained below. FIG. 4A is a schematic diagram of a fifth flow of a method for controlling an application terminal in an exemplary embodiment of the present disclosure, FIG. 4B is a schematic diagram of a sixth flow of a method for controlling an application terminal in an exemplary embodiment of the present disclosure, and FIG. 4C is a schematic diagram of a seventh flow of a method for controlling an application terminal in an exemplary embodiment of the present disclosure.

In an exemplary embodiment, the first mode may be one of the independent running mode and the human-computer interaction mode, and the second mode may be the other of the independent running mode and the human-computer interaction mode, wherein the level of interaction of the human-computer interaction mode is higher than the level of interaction of the independent running mode. as shown in FIG. 4A, if the working mode of the application terminal meets the preset switching condition, act 23 may include: act 233: controlling the working mode of the application terminal to switch from the independent running mode to the human-computer interaction mode, or act 234: controlling the working mode of the application terminal to switch from the human-computer interaction mode to the independent running mode.

In an exemplary embodiment, the terminal form of the application terminal may include an independent running form and a human-computer interaction form, the networking mode of the application terminal may include an external network connection mode and a local connection mode, and the running function of the application terminal may include a human-computer interaction function and a non-human-computer interaction function. Then, as shown in FIG. 4B, act 233 may include: act 2331: any one or more of controlling the terminal form of the application terminal to be in the human-computer interaction form, controlling the networking mode of the application terminal to be in the local connection mode, and controlling the running function of the application terminal to be in the human-computer interaction function are performed. In this way, the working mode of the application terminal can be in the human-computer interaction mode. Alternatively, as shown in FIG. 4C, act 234 may include: act 2341: any one or more of controlling the terminal form of the application terminal to be in the independent running form, controlling the networking mode of the application terminal to be in the external network connection mode, and controlling the running function of the application terminal to be in the non-human-computer interaction function are performed. In this way, the working mode of the application terminal can be in the independent running mode.

In an exemplary embodiment, relatively speaking, the level of user interaction is lower in the independent running form and higher in the human-computer interaction form. In the local connection mode, the level of user interaction is higher, while in the external network connection mode, the interaction level is lower. The level of user interaction is higher in the human-computer interaction function, but lower in the non-human-computer interaction function.

In an exemplary embodiment, taking a case that the application terminal includes a camera and the camera may include a housing, a camera body and a telescopic component as an example, the independent running form may refer to a form in which the telescopic component is in a contracted state and the camera body is located inside the housing, and the human-computer interaction form may refer to a form in which the telescopic component is in an extended state and at least a portion of the camera body is located outside the housing.

In an exemplary embodiment, taking a case that the application terminal includes a camera and the camera may include a color changeable component as an example, the color of the color changeable component is the same as the color of the surrounding environment of the camera in the independent running form and the color of the color changeable component is the same as the color of the surrounding environment of the camera in the human-computer interaction form; alternatively, the color of the color changeable component is the same as the color of the surrounding environment of the camera in the independent running form and the color of the color changeable component is different from the color of the surrounding environment of the camera in the human-computer interaction form.

In an exemplary embodiment, taking the application terminal including a camera as an example, the independent running form may include, but is not limited to: closing the protective cover, the camera body extending out of the housing, the camera body being located in the housing and shooting from the second opening, the color of the camera being different from the color of the surrounding wall, or the color of the camera being the same as the color of the surrounding wall, etc. Alternatively, the human-computer interaction form may include, but is not limited to: closing the protective cover, the camera body extending out of the housing, the camera body being located inside the housing (e.g., shooting can be made from a second opening opened in the housing), or the color of the camera is different from that of the surrounding wall, etc. Here, no limitation is made thereto in embodiments of the present disclosure.

In an exemplary embodiment, taking the application terminal including a camera as an example, the human-computer interaction function may include, but is not limited to, a fitness assistance function, an entertainment interaction function, an escort function, etc. Alternatively, the non-human-computer interaction function may include, but are not limited to, a monitoring function, a hibernation function, etc. Here, no limitation is made thereto in embodiments of the present disclosure.

For example, taking the application terminal including a camera as an example, when the running function of the application terminal is in the non-human-computer interaction function, for example, the hibernation function, the independent running form of the application terminal may correspond to opening the protective cover so that the lens of the camera does not collect images. Alternatively, the independent running form of the application terminal may correspond to the camera body being located in the housing. Here, no limitation is made thereto in embodiments of the present disclosure, and it may be set by those skilled in the art or users according to an application scenario.

For another example, taking the application terminal including a camera as an example, when the running function of the application terminal is in the non-human-computer interaction function, such as the monitoring function, the monitoring function corresponds to the independent running mode, and the independent running form of the application terminal can correspond to closing the protective cover, so that the camera can work normally. Alternatively, the independent running form of the application terminal can correspond to the fact that the camera body is located in the housing and the second opening is in an open state at the same time (shooting can be made from the second opening opened in the housing), so that the overall volume of the camera is smaller, better concealment effect can be achieved, and the influence on the monitored object can be reduced. Alternatively, the independent running form of the application terminal can correspond to the camera body extending out of the housing for shooting, which can facilitate the monitored object to know that it is currently in a non-privacy protection state. Alternatively, the independent running form of the application terminal can correspond to the color of the camera being different from the color of the surrounding wall, which can facilitate the monitored object to know that it is currently in a non-privacy protection state. Alternatively, the independent running form of the application terminal can correspond to the color of the camera being same as the color of the surrounding wall, so that better concealment effect can be achieved and the influence on the monitored object can be reduced.

For another example, taking the application terminal including a camera as an example, and taking the running function of the application terminal in the human-computer interaction function, such as a fitness assistance function, an entertainment interaction function or an escort function, etc., as an example, the human-computer interaction function corresponds to the human-computer interaction mode, and the human-computer interaction form of the application terminal can correspond to closing the protective cover, so that the camera can better interact with the user and improve the user experience. Alternatively, the human-computer interaction form of the application terminal can correspond to the telescopic component being in an extended state and at least part of the camera body being located outside the housing. In this way, it is easy for the camera to rotate, or the camera is easier to be found by the user to facilitate the user to align the lens, can better interact with the user, can improve the user experience. Alternatively, when the running function of the application terminal adopts the fitness assistance function, the entertainment interaction function or the escort function, etc., the human-computer interaction form of the application terminal can correspond to the color of the camera being different from the color of the surrounding wall, for example, the color of the camera can be the color preferred by the user or the eye-catching color, etc., so that the interactive service can be better provided and the user experience can be improved. Here, no limitation is made thereto in embodiments of the present disclosure, and it may be set by those skilled in the art or users according to an application scenario.

How to switch the working mode of the application terminal is described below by taking the terminal form of the application terminal including a first terminal form and a second terminal form as an example.

In an embodiment, taking a case that the application terminal includes a camera and the camera may include a housing, a camera body and a telescopic component as an example, the terminal form of the application terminal may include, but is not limited to, a first terminal form corresponding to a non-privacy protection mode and a second terminal form corresponding to a privacy protection mode, wherein the first terminal form may refer to a form in which the telescopic component is in an extended state and at least a portion of the camera body is located outside the housing, and the second terminal form may refer to a form in which the telescopic component is in a contracted state and the camera body is located inside the housing.

In an embodiment, taking a case that the application terminal includes a camera, the camera may further include a color changeable component, the first terminal form corresponds to a non-privacy protection mode, and the second terminal form corresponds to a privacy protection mode as an example, the color of the color changeable component is the same as that of the surrounding environment of the camera in the first terminal form, and the color of the color changeable component is the same as that of the surrounding environment of the camera in the second terminal form. Alternatively, the color of the color changeable component is different from the color of the surrounding environment of the camera in the first terminal form, and the color of the color changeable component is the same as the color of the surrounding environment of the camera in the second terminal form.

For example, taking a case that the first terminal form corresponds to the non-privacy protection mode and the second terminal form corresponds to the privacy protection mode as an example, the first terminal form may include, but not limited to: closing the protective cover, the camera body extending out of the housing, the camera body being located in the housing and monitoring from the second opening, or the color of the camera being different from that of the surrounding wall, etc. The second terminal form may include, but is not limited to that the protective cover is opened, the camera body is located in the housing while the second opening is in a closed state, the camera body is located in the housing and there is no second opening in the housing, the camera body is located in the housing and rotates so that the camera body is not aligned with the second opening, or the color of the camera is the same as that of the surrounding wall, etc. by setting the color of the camera to be the same as that of the surrounding wall, the camera is in a relatively hidden state without special attention of the user. Here, no limitation is made thereto in embodiments of the present disclosure.

In an exemplary embodiment, taking a case that the application terminal includes a camera and the camera may include a housing, a camera body and a telescopic component as an example, the terminal form of the application terminal may include a first terminal form corresponding to an independent running mode and a second terminal form corresponding to a human-computer interaction mode, wherein the first terminal form may refer to a form in which the telescopic component is in a contracted state and the camera body is located inside the housing, and the second terminal form may refer to a form in which the telescopic component is in an extended state and at least part of the camera body is located outside the housing.

In an embodiment, taking a case that the application terminal includes a camera and the camera may include a color changeable component as an example, the first terminal form corresponds to an independent running mode, the second terminal form corresponds to a human-computer interaction mode, the color of the color changeable component is the same as the color of the surrounding environment of the camera in the first terminal form, and the color of the color changeable component is the same as the color of the surrounding environment of the camera in the second terminal form; alternatively, the color of the color changeable component is the same as the color of the surrounding environment of the camera in the first terminal form and the color of the color changeable component is different from the color of the surrounding environment of the camera in the second terminal form.

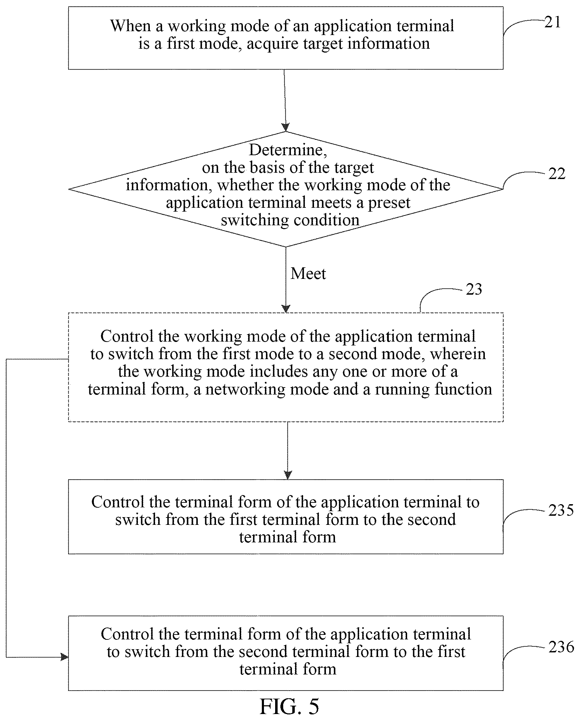

In an embodiment, taking the terminal form of the application terminal including a first terminal form and a second terminal form as an example, FIG. 5 is a schematic diagram of an eighth flow of a method for controlling an application terminal in an exemplary embodiment of the present disclosure. as shown in FIG. 5, after act 22, if the working mode of the application terminal meets a preset switching condition, act 23 may include: act 235: controlling the terminal form of the application terminal to switch from the first terminal form to the second terminal form; alternatively, act 236: controlling the terminal form of the application terminal to switch from the second terminal form to the first terminal form.

For example, taking the application terminal including a camera as an example, when a target user returns to a target place (e.g., the user's residence, office etc., set by the application terminal ), it can be determined that the working mode of the application terminal meets the preset switching condition, and at this time, act 235 can be performed to control the terminal form of the application terminal to switch from a form in which the camera body is located inside the housing to a form in which at least part of the camera body is located outside the housing. Therefore, it is convenient for the camera to rotate or the user to align the lens, which can better provide the user with a human-computer interaction function and improve the user experience. Alternatively, when the target user leaves the target place (for example, the user's residence, office, etc., set by the application terminal), it may be determined that the working mode of the application terminal meets the preset switching condition, and at this time, act 236 may be performed to control the terminal form of the application terminal to switch from a form in which at least part of the camera body is located outside the housing to a form in which the camera body is located inside the housing. In this way, the overall volume of the camera is smaller, which can play a better concealment effect, reduce the influence on the monitored object, provide better monitoring function to users, and improve the user experience.

Taking the networking mode of the application terminal including a star network and a MESH network as an example, how to switch the working mode of the application terminal is explained below.

In an exemplary embodiment, the networking mode of the application terminal may include, but are not limited to, a star network and a MESH network. For example, the star network may correspond to a non-privacy protection mode, and the MESH network may correspond to a privacy protection mode. Here, no limitation is made thereto in embodiments of the present disclosure.

In an exemplary embodiment, the MESH network may include, but is not limited to, a MESH network based on a Bluetooth protocol, a MESH network based on a ZigBee protocol, a MESH network based on a Wireless Fidelity (WiFi) protocol, etc. Here, no limitation is made thereto in embodiments of the present disclosure.

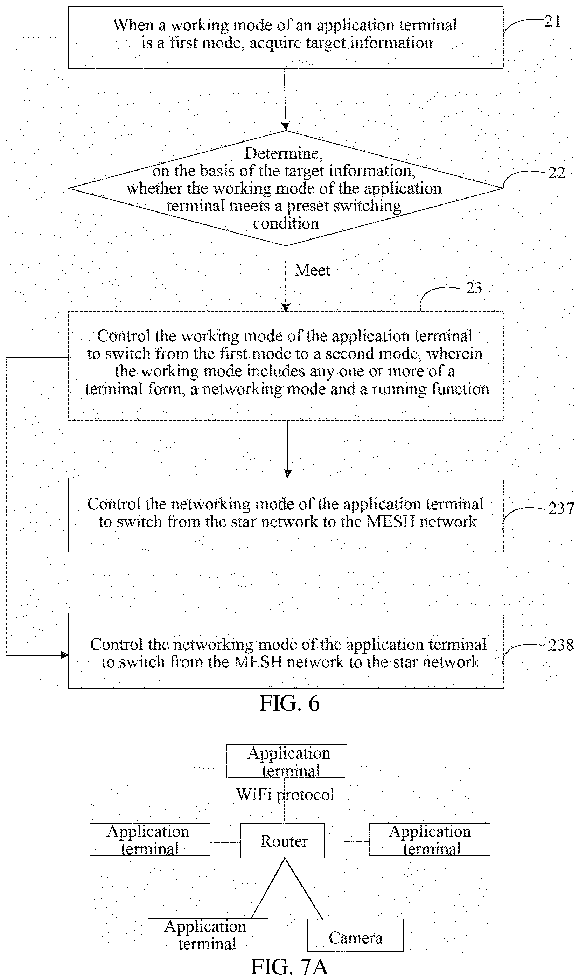

In an exemplary embodiment, taking the networking mode of the application terminal including a star network and a MESH network as an example, FIG. 6 is a schematic diagram of a ninth flow of a method for controlling an application terminal in an exemplary embodiment of the present disclosure.

As shown in FIG. 6, if the working mode of the application terminal meets the preset switching condition, act 23 may include: act 237: controlling the networking mode of the application terminal to switch from the star network to the MESH network; alternatively, act 238: controlling the networking mode of the application terminal to switch from the MESH network to the star network.

For example, taking the application terminal including a camera as an example, when a target user returns to a target place (for example, a user's residence, an office, etc., set by the application terminal), it can be determined that the working mode of the application terminal meets the preset switching condition. At this time, act 237 can be performed to control the networking mode of the application terminal to switch from the star network to the MESH network. In this way, the privacy safety of users can be protected. Alternatively, when the target user leaves the target place (for example, the user's residence, office, etc., set by the application terminal), it can be determined that the working mode of the application terminal meets the preset switching condition. At this time, act 238 can be performed to control the networking mode of the application terminal to switch from the MESH network to the star network. In this way, it is convenient to provide a monitoring function to the user, and the user experience can be improved. Here, no limitation is made thereto in embodiments of the present disclosure.

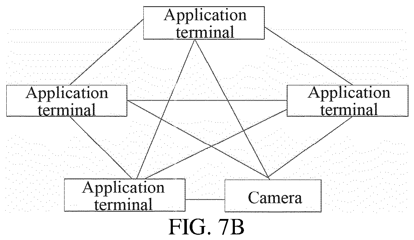

For example, taking the application terminal as a camera as an example, as shown in FIG. 7A, the application terminal can be connected to a gateway (e.g., a router) through a WiFi interface to build a star network, or as shown in FIG. 7B, it can be connected to other application terminals (i.e., Bluetooth devices) through a Bluetooth interface to build a Bluetooth MESH network.

For example, when the mobile terminal and the application terminal are not in the same local area network, the networking mode of the application terminal can adopt a star network, and a wide area network connection is enabled through a router, the connection request sent by the mobile terminal through the wide area network can be received; alternatively, when the mobile terminal and the application terminal are in the same local area network, the networking mode of the application terminal can adopt a MESH network, for example, the application terminal searches for other local application terminals through Bluetooth, ZigBee and other protocols, and establishes a local MESH network with other local application terminals.

In an exemplary embodiment, act 237 may include controlling the networking mode of the application terminal to switch from the star network to the MESH network by initiating a networking request, alternatively, controlling the networking mode of the application terminal to switch from the star network to the MESH network by joining a constructed local MESH network. Here, no limitation is made thereto in embodiments of the present disclosure.

In an exemplary embodiment, act 237 may include: act 2371: acquiring a MESH network type supported by at least one mobile terminal connected with the application terminal; act 2372: controlling the networking mode of the application terminal to switch from the star network to the MESH network based on the MESH network type supported by the mobile terminal.

In an exemplary embodiment, the MESH network type may include, but is not limited to, a Bluetooth protocol-based MESH network, a ZigBee protocol-based MESH network, or a WiFi protocol-based MESH network. Here, no limitation is made thereto in embodiments of the present disclosure.

In an exemplary embodiment, act 2372 may include: if the quantity of MESH network types supported by the mobile terminal is one, controlling the networking mode of the application terminal to switch from the star network to a MESH network corresponding to the MESH network type supported by the mobile terminal; alternatively, if the quantity of MESH network types supported by the mobile terminal is multiple, acquiring preset network parameter in the application terminal; determining a target MESH network type corresponding to the preset network parameter from the MESH network types supported by the mobile terminal based on the preset network parameter and a pre-stored mapping table between network parameter and network type; controlling the networking mode of the application terminal to switch from the star network to a MESH network corresponding to the target MESH network type.

For example, if the mobile terminal has and enables the function of the WiFi protocol-based MESH network, the application terminal starts the function based on WiFi MESH; alternatively, if the mobile terminal has and enables the function of the Bluetooth protocol-based MESH network, the application terminal starts the function of Bluetooth MESH; alternatively, when the mobile device has and simultaneously enables the functions of WIFI MESH and Bluetooth MESH, the application terminal selects a MESH networking according to network parameters preset by itself.

In an exemplary embodiment, the network parameters may include but are not limited to, network speed, quantity of network devices or network power consumption. Here, no limitation is made thereto in embodiments of the present disclosure.

In an exemplary embodiment, the mapping table between the network parameter and network type may be shown in Table 1 below:

**Table 1**

| | WiFi MESH | Bluetooth MESH |
|---|---|---|
| MESH Network Speed | Quick | Slow |
| Quantity of MESH Network devices | Get the quantity of devices that support WiFi MESH | Get the quantity of devices that support Bluetooth MESH |
| MESH Network Power Consumption | High | Low |

In an exemplary embodiment, after switching the working mode of the application terminal to the MESH network by performing act 237, the method for controlling the application terminal may further include: closing the star network; data communication can be carried out between the application terminal and at least one mobile terminal connected to the application terminal through the MESH network. In this way, the privacy leakage of users can be reduced and avoided, and the risk of privacy leakage can be reduced.

For example, after the application terminal enables the MESH network, the star network can be closed, so at least one mobile terminal connected to the application terminal can send a control or query request to the application terminal through the MESH network, or the application terminal can return a control or query response to the mobile terminal through the MESH network.

In an exemplary embodiment, the terminal form of the application terminal in the star network and the terminal form of the application terminal in the MESH network may be the same or different. for example, taking a case that the terminal form of the application terminal in the star network is different from that in the MESH network, and the application terminal is the camera above as an example, the application terminal in the star network can adopt a second terminal form, for example, the second terminal form refers to a form in which the telescopic component is in a contracted state and the camera body is located in the housing, etc.; the application terminal in the MESH network may adopt a first terminal form, for example, the first terminal form refers to a form in which the telescopic component is in an extended state and at least part of the camera body is located outside the housing, etc. Here, no limitation is made thereto in embodiments of the present disclosure.

Taking the running functions of the application terminal including a monitoring function and a non-monitoring function as an example, how to switch the working mode of the application terminal is explained below.

In an exemplary embodiment, taking the application terminal including a camera as an example, the running function of the application terminal may include a monitoring function and a non-monitoring function. For example, the monitoring function can correspond to a non-privacy protection mode and an independent running mode, and the non-monitoring function can correspond to a privacy protection mode and a human-computer interaction mode. Here, no limitation is made thereto in embodiments of the present disclosure.

For example, the monitoring function may refer to a function of monitoring monitored objects such as a target area, a target object or a target user. For example, the non-monitoring function may include any one or more of a hibernation function, a fitness assistance function, an entertainment interaction function, and an escort function. For example, the hibernation function may refer to a function that consumes less power than the monitoring function. For example, the fitness assistance function may refer to a function provided when a user exercises. For example, the entertainment interaction function may refer to a function provided to interact with a user while the user is engaged in an entertainment activity (e.g., a game or multimedia playback, etc.). For example, the escort function can refer to a function of accompanying the elderly or children who need a companion. Here, no limitation is made thereto in embodiments of the present disclosure.

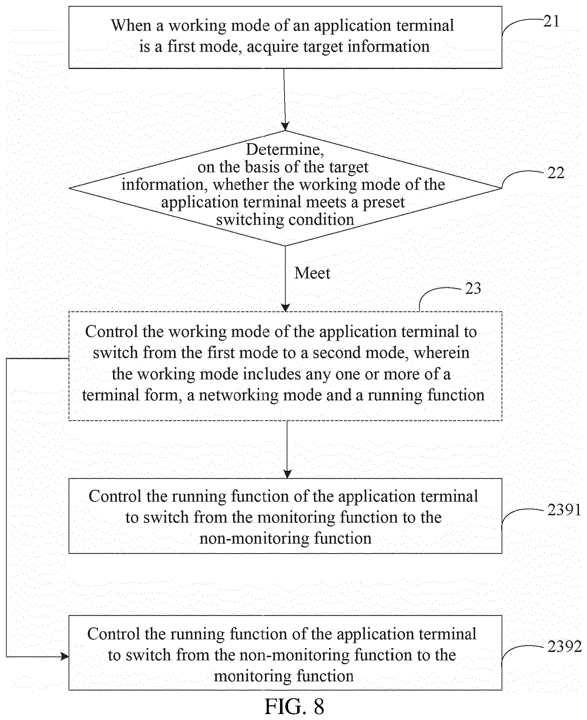

In an exemplary embodiment, taking the running function of the application terminal including a monitoring function and a non-monitoring function as an example, FIG. 8 is a schematic diagram of a tenth flow of a method for controlling an application terminal in an exemplary embodiment of the present disclosure. as shown in FIG. 8, if the working mode of the application terminal meets a preset switching condition, act 23 may include: act 2391: controlling the running function of the application terminal to switch from the monitoring function to the non-monitoring function; alternatively, act 2392: controlling the running function of the application terminal to switch from the non-monitoring function to the monitoring function.

For example, taking the application terminal including a camera as an example, when the target user returns to the target place (for example, the user's residence, office, etc., set by the application terminal), it can be determined that the working mode of the application terminal meets the preset switching condition, and at this time, act 2391 can be performed to achieve automatic switching from the monitoring function to the non-monitoring function. In this way, the privacy and safety of the user can be protected, and the user experience can be improved. Alternatively, when the target user leaves the target place (for example, the user's residence, office, etc., set by the application terminal), it may be determined that the working mode of the application terminal meets the preset switching condition, and at this time, act 2392 may be performed to achieve switching from the non-monitoring function to the monitoring function. In this way, it is convenient to provide the monitoring function to the user, and the user experience can be improved. Here, no limitation is made thereto in embodiments of the present disclosure.

In an exemplary embodiment, act 2391 may further include acquiring state information of the target user; based on the state information of the target user, determining the current state of the target user; controlling the running function of the application terminal to switch to a target non-monitoring function corresponding to the current state of the target user. For example, the state information of the target user may include any one or more of position information of the target user, physiological information of the target user and action information of the target user. Here, no limitation is made thereto in embodiments of the present disclosure.

For example, as shown in Table 2 below, the target non-monitoring function may be determined based on a mapping table between a preset user state and the non-monitoring function. for example, when the application terminal determines that the current state of the target user is a fitness state according to the state information of the target user, the application terminal can be controlled to enable the fitness assistance function, so that in the fitness assistance function, the application terminal can detect the action of the user to provide fitness training feedback for the user. Alternatively, when the current state of the target user is a leisure state, the application terminal can be controlled to enable the entertainment interaction function, so that the application terminal can enhance the interaction with the user, for example, the application terminal can provide multimedia output, including music playback or video playback, etc. For example, video playback may output a collection of monitoring screens through a projection device included in the application terminal, or through a multimedia device (e.g., a television) connected to the application terminal.

**Table 2**

| | |
|---|---|
| User state | Non-monitoring function |
| Fitness state | Fitness assistance function |
| Leisure state | Entertainment interaction function |
| Sleep state | Hibernation function |

In an exemplary embodiment, when the application terminal performs different functions, the terminal form of the application terminal may be the same or different. For example, when the application terminal performs different functions, the terminal form of the application terminal may be different, so that the user experience can be improved. for another example, taking the application terminal as a camera as an example, when the application terminal performs the monitoring function, the application terminal can adopt a form in which the telescopic component is in a contracted state and the camera body is located in the housing. At this time, the overall volume of the camera is smaller, which can play a better concealment effect and have less influence on the monitored object; alternatively, when the application terminal performs the fitness assistance function, the application terminal can adopt a form in which the telescopic component is in an extended state and at least part of the camera body is located outside the housing, so that the interactive experience between the application terminal and the user can be improved.

In an exemplary embodiment, the application terminal may have at least two functions, and the at least two functions cannot be enabled simultaneously. For example, the application terminal may be connected to the same server or different servers when performing a plurality of functions. For example, taking the application terminal having a monitoring function and an escort function as an example, the application terminal can be connected with a monitoring server when the monitoring function is executed, and the application terminal can be connected with an accompanying server when the escort function is executed. Here, no limitation is made thereto in embodiments of the present disclosure.

In an exemplary embodiment, the application terminal may have at least three functions, including a first function, a second function, and a third function, with a certain order relationship between the at least three functions, and the order of the plurality of functions may be configured by a user. For example, taking the first function as a monitoring function, the second function as a fitness assistance function, and the third function as an entertainment interaction function as an example, the second function and the third function can form a sequence relationship. When the mobile terminal and the application terminal are in a same LAN, the first function can be switched to the second function, and the third function can be started after a certain time interval. For example, the second function may include a plurality of sub-functions, such as a fitness assistance function or an escort function or the like.

Taking the running function including a normal working mode and a power saving mode as an example, how to switch the working mode of the application terminal is explained below.

In an exemplary embodiment, the running function of the application terminal may include a normal working mode and a power saving mode. Herein, the power consumption of the power saving mode is lower than that of the normal working mode. For example, the normal working mode can correspond to the non-privacy protection mode, the independent running mode and the human-computer interaction mode, and the power saving mode can correspond to the privacy protection mode. Here, no limitation is made thereto in embodiments of the present disclosure.

For example, the normal working mode may include a monitoring function, a network connection being in a turned-on state, a fitness assistance function, an entertainment interaction function or an escort function, etc. For example, the power saving mode may include a hibernation function or a network connection being in a disconnected state. Here, no limitation is made thereto in embodiments of the present disclosure.

In an exemplary embodiment, taking the running function of the application terminal including a normal working mode and a power saving mode as an example, if the working mode of the application terminal meets a preset switching condition, act 23 may include: act 230-1: controlling the running function of the application terminal to switch from the normal working mode to the power saving mode; or act 230-2: controlling the running function of the application terminal to switch from the power saving mode to the normal working mode.

For example, taking the application terminal including a camera as an example, when the target user returns to the target place (for example, the user's residence, office, etc., set by the application terminal), it can be determined that the working mode of the application terminal meets the preset switching condition, and at this time, act 230-1 can be performed to switch from the normal working mode to the power saving mode. Thus, the power consumption of the application terminal can be reduced. Alternatively, when the target user leaves the target place (for example, the user's residence, office, etc., set by the application terminal), it may be determined that the working mode of the application terminal meets the preset switching condition, and at this time, act 230-2 may be performed to switch from the power saving mode to the normal working mode (for example, the monitoring function). In this way, it is convenient to provide a monitoring function to the user, and the user experience can be improved. Here, no limitation is made thereto in embodiments of the present disclosure.

How to determine whether the working mode of the application terminal meets the preset switching condition is explained below.

In an exemplary embodiment, taking a case that the target information includes identification information of at least one mobile terminal connected to the application terminal as an example, then act 22 may include determining whether the working mode of the application terminal meets a preset switching condition based on whether the identification information of the at least one mobile terminal matches a preset terminal list.

In an exemplary embodiment, the identification information of the mobile terminal may include, but is not limited to, any one or more of a terminal name, a device identification, a MAC address, and a universal unique identifier.

In an exemplary embodiment, the preset terminal list may include, but is not limited to, at least one first preset identification information for indicating a set terminal or second preset identification information for indicating arbitrary terminal. For example, the first preset identification information may refer to identification information of the set terminal, such as a terminal name of the set terminal, a MAC address of the set terminal, or a universal unique identifier of the set terminal. For example, the second preset identification information may refer to preset information that can characterize arbitrary terminal, such as special characters like asterisk (*), pound (#), etc. Of course, the preset terminal list may include other information in addition to the information listed above. Here, no limitation is made thereto in embodiments of the present disclosure.

For example, taking a case that at least one mobile terminal connected with the application terminal includes a first mobile terminal A and a second mobile terminal B as an example, if the preset terminal list includes: identification information of the first mobile terminal A and identification information of the second mobile terminal B, the identification information of the at least one mobile terminal connected with the application terminal is completely matched with the preset terminal list; alternatively, if the preset terminal list includes identification information of the second mobile terminal B and identification information of a third mobile terminal C, the identification information of the at least one mobile terminal connected to the application terminal does not completely match the preset terminal list; alternatively, if the preset terminal list includes identification information of the third mobile terminal C and identification information of the fourth mobile terminal D, the identification information of the at least one mobile terminal connected to the application terminal does not match the preset terminal list; alternatively, if the preset terminal list includes an asterisk (*) for indicating an arbitrary terminal, the identification information of the at least one mobile terminal connected to the application terminal completely matches the preset terminal list.

In an exemplary embodiment, act 23 may include determining that the working mode of the application terminal meets the preset switching condition if the identification information of the at least one mobile terminal matches the first preset identification information, or if the second preset identification information exists in the preset terminal list indicating that the identification information of the at least one mobile terminal matches the preset terminal list. Here, no limitation is made thereto in embodiments of the present disclosure.

In an exemplary embodiment, taking the target information including distance information between at least one mobile terminal connected to the application terminal and the application terminal as an example, act 22 may include determining whether the working mode of the application terminal meets a preset switching condition based on whether the distance information is less than a preset threshold or whether the distance information is within a preset range.

In an exemplary embodiment, act 23 may include determining that the working mode of the application terminal meets a preset switching condition if the distance information between the at least one mobile terminal connected to the application terminal and the application terminal is less than a preset threshold, or if the distance information between the at least one mobile terminal connected to the application terminal and the application terminal is within a preset range.

In an exemplary embodiment, the preset threshold may be a default value set by the system or a value set by the user, etc. for example, the preset threshold can be any integer value between 10 meters and 100 meters. Here, no limitation is made thereto in embodiments of the present disclosure.

In an exemplary embodiment, the preset range may be a default range set by the system or a range set by the user, etc. For example, the preset range can be 10 meters to 100 meters. Here, no limitation is made thereto in embodiments of the present disclosure.

For example, taking the application terminal as a camera disposed in a user's residence as an example, when the distance information between at least one mobile terminal connected with the application terminal and the application terminal is less than the preset threshold or within the preset range, it indicates that the distance information between the user using the mobile terminal and the user's residence is less than the preset threshold or within the preset range. At this time, the user is about to return to the residence, then the act 23 can be executed to switch the working mode of the camera in the residence to the privacy protection mode, so that the privacy leakage of the user can be reduced and avoided, and the risk of privacy leakage can be reduced. Alternatively, act 23 can be performed to switch the working mode of the camera in the residence to the human-computer interaction mode, so as to facilitate providing interactive services for users.

In an exemplary embodiment, taking a case that the target information includes position information of at least one mobile terminal connected to the application terminal as an example, act 22 may include determining whether the working mode of the application terminal meets a preset switching condition based on whether the position information of the at least one mobile terminal is located within a preset area.

In an exemplary embodiment, act 23 may include determining that the working mode of the application terminal meets the preset switching condition if the position information of the at least one mobile terminal is located within the preset area.

In an exemplary embodiment, the preset area may be a default area set by the system or an area set by the user, etc. For example, the preset area may be a residential area where the user's residence is located or an area within a preset distance centered on the location of the user's residence. Here, no limitation is made thereto in embodiments of the present disclosure.

For example, taking the application terminal as a camera disposed in a user's residence as an example, when the position information of at least one mobile terminal connected with the application terminal is located in the preset area, indicating that the user is about to return to the residence, then act 23 can be performed to switch the working mode of the camera in the residence to the privacy protection mode, so that the privacy leakage of the user can be reduced and avoided, and the risk of privacy leakage can be reduced. Alternatively, act 23 can be performed to switch the working mode of the camera in the residence to the human-computer interaction mode, so as to facilitate providing interactive services for users.

In an exemplary embodiment, taking a case that the target information includes image information of the environment in which the application terminal is located as an example, then act 22 may include: determining whether a first target user or a second target user is located in the environment in which the application terminal is located based on whether the pre-stored image information of the first target user or the pre-stored image information of the second target user exists in the image information of the environment in which the application terminal is located; based on whether the first target user or the second target user is located in the environment in which the application terminal is located, determining whether the working mode of the application terminal meets the preset switching condition, and the second target user is different from the first target user.

In an exemplary embodiment, act 23 may include: if the image information of the first target user does not exist in the image information of the environment in which the application terminal is located, determining that the first target user is not located in the environment in which the application terminal is located, and determining that the working mode of the application terminal meets the preset switching condition; alternatively, if the image information of the second target user exists in the image information of the environment where the application terminal is located, determining that the second target user is located in the environment where the application terminal is located, and determining that the working mode of the application terminal meets the preset switching condition.

In an exemplary embodiment, the environment in which the application terminal is located may refer to a place such as a user's residence, office, classroom or laboratory. Here, no limitation is made thereto in embodiments of the present disclosure.

In an exemplary embodiment, taking a case that the environment in which the application terminal is located refers to a user's residence as an example, the first target user may be a group of people who need to be accompanied, such as a child or the elderly. Correspondingly, the second target user may be the parents of the child or the children of the elderly. Here, no limitation is made thereto in embodiments of the present disclosure.

For example, taking the first target user as a child, the second target user as the parents of the child as an example, and taking the application terminal as a camera provided in the user's residence as an example, when the image information of the first target user (e.g., the child) does not exist in the image information of the environment where the application terminal is located, indicating that the first target user (e.g., the child) is not in the residence, at this time, the second target user (e.g., the child's parents) cannot supervise the child's activities through the camera in the residence, then the working mode of the camera in the residence can be switched to the non-monitoring function, e.g., the hibernation function, so that the power consumption of the camera can be reduced.

Alternatively, if the image information of the second target user exists in the image information of the environment where the application terminal is located, indicating that the parents of the child have returned to the residence and there is no need to monitor the child through the camera in the residence, then act 23 can be performed to switch the working mode of the camera in the residence to the privacy protection mode, so that the privacy leakage of the user can be reduced and avoided, and the risk of privacy leakage can be reduced. Alternatively, act 23 can be performed to switch the working mode of the camera in the residence to the human-computer interaction mode, so as to facilitate providing rich interactive services for users.

The solution in the embodiment of the present disclosure will be illustrated in different application scenarios by taking the target information including identification information of at least one mobile terminal connected to the application terminal as an example.

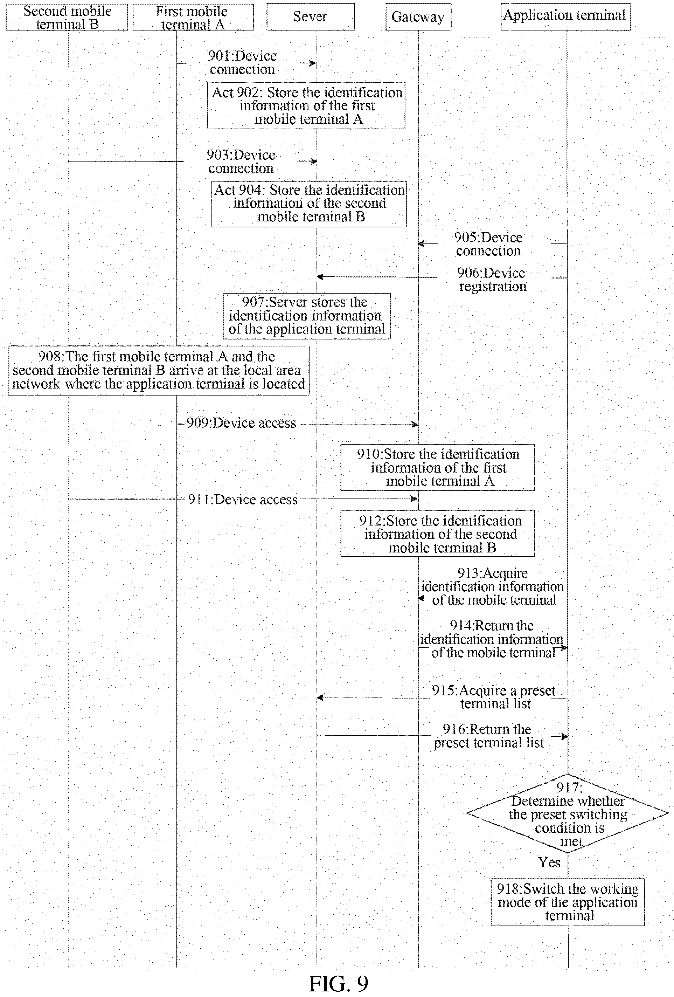

First scenario: FIG. 9 is a schematic diagram of a flow of a first application scenario of a method for controlling an application terminal in an exemplary embodiment of the present disclosure. In FIG. 9, it is illustrated by taking a case that a preset terminal list is stored at the server, identification information of at least one mobile terminal connected to the application terminal is stored at the gateway, and the application terminal determines that the working mode of the application terminal meets a preset switching condition as an example. In FIG. 9, it is illustrated by taking the first mobile terminal A and the second mobile Terminal B as an example. In practical applications, the quantity of mobile terminals connected to the application terminal may be more or less than two.

In an exemplary embodiment, as shown in FIG. 9, the method for controlling an application terminal may include following acts.
Act 901: The first mobile terminal A initiates a device connection to the server;
Act 902: The server stores the identification information of the first mobile terminal A;
Act 903: The second mobile terminal B initiates a device connection to the server;
Act 904: The server stores the identification information of the second mobile terminal B;
Act 905: The application terminal initiates a device connection to the gateway;
Act 906: The application terminal performs device registration with the server through the gateway;
Act 907: The server stores the identification information of the application terminal;
Act 908: The first mobile terminal A and the second mobile terminal B arrive at the local area network where the application terminal is located;
Act 909: The first mobile terminal A is accessed to the gateway;
Act 910: The gateway stores the identification information of the first mobile terminal A;
Act 911: The second mobile terminal B is accessed to the gateway;
Act 912: The gateway stores the identification information of the second mobile terminal B;

At this time, the first mobile terminal A and the second mobile terminal B communicate with the application terminal through the local area network.
Act 913: The application terminal sends a first request to the gateway, the first request is used for acquiring identification information of at least one mobile terminal connected with the application terminal; that is, acquiring identification information of the mobile terminal currently connected to the gateway;
Act 914: In response to the first request, the gateway transmits the identification information of the at least one mobile terminal connected to the application terminal to the application terminal;
Act 915: The application terminal sends a second request to the server, the second request is used for acquiring a preset terminal list;
Act 916: In response to the second request, the server transmits the preset terminal list to the application terminal; herein, the preset terminal list includes: at least one first preset identification information for indicating a set terminal or second preset identification information for indicating arbitrary terminal;
Act 917: The application terminal determines whether the working mode of the application terminal meets the preset switching condition based on whether the identification information of at least one mobile terminal matches the preset terminal list;

For example, if the identification information of the at least one mobile terminal matches the first preset identification information, or if the second preset identification information exists in the preset terminal list, it is determined that the working mode of the application terminal meets the preset switching condition.

Act 918: The application terminal determines that the working mode of the application terminal meets the preset switching condition, and the application terminal switches the working mode from the first mode to the second mode.

For example, the identification information may include any one or more of a terminal name, a MAC address and a universal unique identifier.

For example, taking the application terminal as a camera as an example, the color of the camera is adjusted, the angle of the camera is adjusted, the angle of the lens in the camera is adjusted, the protective cover of the camera is opened, the network connection of the camera is disconnected or the hibernation mode of the camera is enabled.

In an exemplary embodiment, acts 913 to 917 above may be performed periodically. For example, a preset interval time may be set in the application terminal to periodically execute the above acts 913 to 917. for example, the preset interval time can be set by the system or by the user himself. Here, no limitation is made thereto in embodiments of the present disclosure.

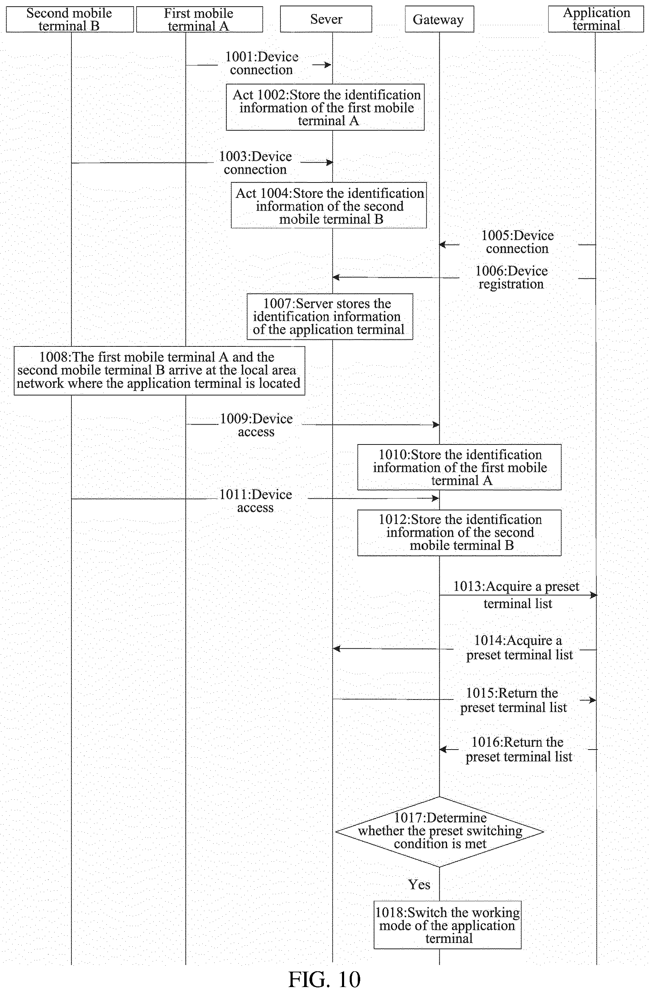

Second scenario: FIG. 10 is a schematic diagram of a flow of a second application scenario of a method for controlling an application terminal in an exemplary embodiment of the present disclosure. In FIG. 10, it is illustrated by taking a case that the preset terminal list is stored at the server, the identification information of the at least one mobile terminal connected to the application terminal is stored at the gateway, and the gateway determines that the working mode of the application terminal meets the preset switching condition as an example. Also, the first mobile terminal A and the second mobile terminal B are shown in FIG. 10, but it is obvious that the quantity of mobile terminals connected to the application terminal may be more or less than two.

In an exemplary embodiment, as shown in FIG. 10, the method for controlling an application terminal may include following acts.
Act 1001: The first mobile terminal A initiates a device connection to the server;
Act 1002: The server stores the identification information of the first mobile terminal A;
Act 1003: The second mobile terminal B initiates a device connection to the server;
Act 1004: The server stores the identification information of the second mobile terminal B;
Act 1005: The application terminal initiates a device connection to the gateway;
Act 1006: The application terminal performs device registration to the server through the gateway;
Act 1007: The server stores the identification information of the application terminal;
Act 1008: The first mobile terminal A and the second mobile terminal B arrive at the local area network where the application terminal is located;
Act 1009: The first mobile terminal A is accessed to the gateway;
Act 1010: The gateway stores the identification information of the first mobile terminal A;
Act 1011: The second mobile terminal B is accessed to the gateway;
Act 1012: The gateway stores the identification information of the second mobile terminal B;

At this time, the first mobile terminal A and the second mobile terminal B communicate with the application terminal through the local area network.

Act 1013: The gateway sends a third request to the application terminal, and the third request is used for acquiring a preset terminal list;

Act 1014: In response to the third request, the application terminal sends a second request to the server, the second request being used for acquiring the preset terminal list;

Act 1015: In response to the second request, the server sends the preset terminal list to the application terminal; herein, the preset terminal list includes: at least one first preset identification information for indicating a set terminal or second preset identification information for indicating arbitrary terminal;

Act 1016: The application terminal sends the preset terminal list to the gateway;

Act 1017: The gateway determines whether the working mode of the application terminal meets the preset switching condition based on whether the identification information of the at least one mobile terminal matches the preset terminal list;

For example, the gateway acquires the identification information of the at least one mobile terminal connected to the application terminal from a local memory. Herein, the identification information includes any one or more of a terminal name, a MAC address and a universal unique identifier.

For example, if the identification information of the at least one mobile terminal matches the first preset identification information, or if the second preset identification information exists in the preset terminal list, it is determined that the working mode of the application terminal meets the preset switching condition.

Act 1018: The gateway determines that the working mode of the application terminal meets the preset switching condition, and the gateway controls the working mode of the application terminal to switch from the first mode to the second mode.

In an exemplary embodiment, acts 1013 to 1017 above may be performed periodically. For example, a preset interval time may be set in the gateway to periodically perform acts 1013 to 1017 above. For example, the preset interval time may be set by the system or may be set by the user itself. Here, no limitation is made thereto in embodiments of the present disclosure.

The above is only examples of application scenarios to which the method for controlling an application terminal in the exemplary embodiment of the present disclosure applies, and the method for controlling an application terminal in the exemplary embodiment of the present disclosure also applies to other application scenarios in addition to the application scenarios listed above. Here, no limitation is made to the application scenario of the method for controlling an application terminal provided by the exemplary embodiment of the present disclosure is.

The above description of the application scenario embodiments are similar to the description of the method embodiments above, and have similar beneficial effects as the method embodiments. Technical details not disclosed in embodiments of the application scenarios of the present disclosure will be understood by those skilled in the art with reference to the description in embodiments of the method of the present disclosure and will not be repeated here.

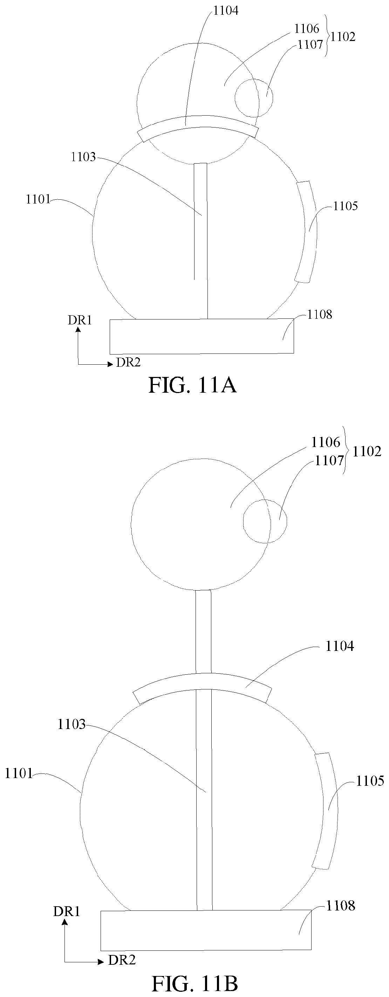

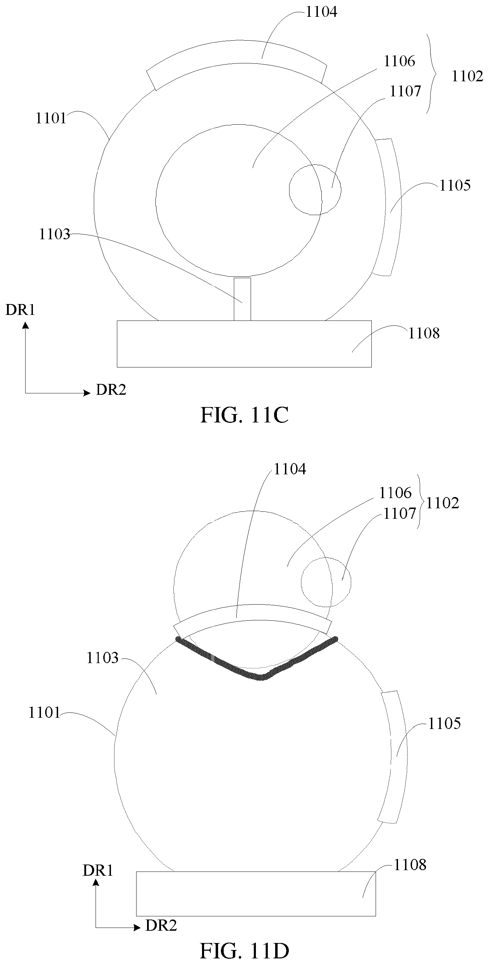

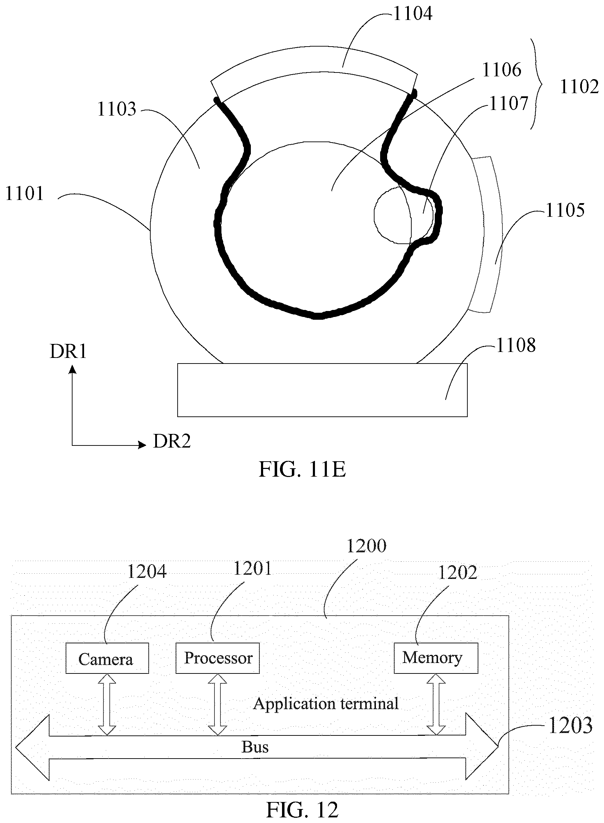

The embodiment of the present disclosure also provides a camera. FIG. 11A is a schematic diagram of a first structure of a camera in an exemplary embodiment of the present disclosure, FIG. 11B is a schematic diagram of a second structure of a camera in an exemplary embodiment of the present disclosure, FIG. 11C is a schematic diagram of a third structure of a camera in an exemplary embodiment of the present disclosure, FIG. 11D is a schematic diagram of a fourth structure of a camera in an exemplary embodiment of the present disclosure, and FIG. 11E is a schematic diagram of a fifth structure of a camera in an exemplary embodiment of the present disclosure. Herein, in FIGS. 11A to 11C, the telescopic component is illustrated as a screw assembly as an example, and in FIGS. 11D to 11E, the telescopic component is illustrated as an inflatable assembly as an example.

In an exemplary embodiment, as shown in FIGS. 11A-11E, the camera may include a housing 1101, a camera body 1102, and a telescopic component 1103.

The housing 1101 may have an accommodating cavity and a first opening 1104. The accommodating cavity is configured to accommodate the camera body 1102 and the telescopic component 1103. And the first opening 1104 is disposed above the housing 1101;

The camera body 1102 is connected with the telescopic component 1103;

The telescopic component 1103 has an extended state and a contracted state, wherein, when the telescopic component 1103 is configured in the extended state, the camera body 1102 extends out of the housing 1101 from the first opening 1104 for shooting; alternatively, when the telescopic component 1103 is configured in the contracted state, the camera body 1102 is retracted from the first opening 1104 into the accommodating cavity.

In an exemplary embodiment, as shown in FIGS. 11A to 11E, the housing 1101 may further have a second opening 1105, wherein the second opening 1105 intersects the first opening 1104, and when the telescopic component 1103 is in the contracted state, the camera body 1102 is retracted into the accommodating cavity from the first opening 1104, and shooting can be performed through the second opening 1105.

In an exemplary embodiment, as shown in FIGS. 11A to 11E, the camera may further include a base 1108 coupled to the housing 1101, the base 1108 is disposed on a side of the housing 1101 away from the first opening 1104, and the base 1108 is configured to support the camera.

For example, the base 1108 may be provided on a wall surface to provide the camera on the wall surface.

In an exemplary embodiment, the second opening 1105 intersecting the first opening 1104 may mean that the first opening 1104 is disposed on a side of the housing 1101 away from the base 1108 (i.e., a side of the housing 1101 in a first direction DR1), and the second opening 1105 is disposed on a side of the housing 1101 in a second direction DR2, the first direction DR1 is a direction away from the base 1108, and the second direction DR2 intersects the first direction DR1.

In an exemplary embodiment, the housing may include, but are not limited to, a portion of a sphere or a portion of a cuboid. Here, no limitation is made thereto in embodiments of the present disclosure.

In an exemplary embodiment, as shown in FIGS. 11A-11E, the camera body 1102 may include a head 1106 coupled to the telescopic component 1103 and a lens 1107 coupled to the head 1106.

In an exemplary embodiment, the telescopic component 1103 may include, but is not limited to, any one of a screw assembly (as shown in FIGS. 11A-11C), an inflatable assembly (as shown in FIGS. 11D-11E), and an elastic assembly. Here, no limitation is made thereto in embodiments of the present disclosure.

In an exemplary embodiment, taking a case that the telescopic component is implemented using a screw assembly or an elastic assembly as an example, an end of the telescopic component close to the camera body may be constructed of an elastic material. In this way, under the condition that the telescopic component can stably support the head, the panning of the head can be supported, and the user experience can be improved.

In an exemplary embodiment, the camera may further include a color changeable component disposed on an outer wall of any one or more of the housing, the camera body, and the telescopic component.

In an exemplary embodiment, the color changeable component may be formed of an electrochromic material.

In an exemplary embodiment, the camera may further include a rotatable component, which may be a pan-tilt head coupled to the housing, the pan-tilt head is disposed on a side of the housing away from the first opening, and the pan-tilt head is configured to adjust an angle of the camera.

In an exemplary embodiment, the camera may further include a switchable component including a first protective cover and a second protective cover, the first protective cover is configured to protect the camera body extending out of the housing from the first opening when in an open state; the second protective cover is configured to close the second opening in an open state.

In an embodiment, the camera has a plurality of different terminal forms.

Taking the camera including a first terminal form and a second terminal form as an example, as shown in FIGS. 11A, 11B and 11D, the second terminal form may refer to a form in which the telescopic component is in an extended state and at least part of the camera body is located outside the housing. For example, as shown in FIG. 11A, the second terminal form may refer to a form in which the lens in the camera body is located outside the housing, or as shown in FIG. 11B, the second terminal form may refer to a form in which both the lens and the head in the camera body are located outside the housing, so that the camera can have a better bionic structure, a more friendly interaction with the user, and the user experience can be improved. As shown in FIGS. 11C and 11E, the first terminal form may refer to a form in which the telescopic component is in a contracted state and the camera body is located in the housing. At this time, the camera can achieve external shooting and monitoring through an opening (i.e., the second opening) on a side of the housing. In this way, the overall volume of the camera is smaller, which can play a better concealment effect and has less influence on the monitored object.

The first terminal form may refer to a form in which the color of the color changeable component is the same as that of the surrounding environment of the camera (e.g., the surrounding wall), and the second terminal form may refer to a form in which the color of the color changeable component is different from that of the surrounding environment of the camera (e.g., the surrounding wall).

Taking the camera including a first terminal form and a second terminal form as an example, the first terminal form may refer to a form the telescopic component is in a contracted state, the camera body is located in the housing and the color of the color changeable component is the same as that of the surrounding environment of the camera, and the second terminal form may refer to a form in which the telescopic component is in an extended state, at least part of the camera body is located outside the housing and the color of the color changeable component is different from that of the surrounding environment of the camera. Here, no limitation is made thereto in embodiments of the present disclosure.

Of course, in addition to the terminal forms listed above, the camera may have other terminal forms, for example, the first terminal form can mean that the lens in the camera is at an angle towards and close to the surrounding wall, and the second terminal form can mean that the lens in the camera is at an angle towards the target user. Here, no limitation is made thereto in embodiments of the present disclosure.

Those of ordinary skill in the art understand that the camera has other essential components, which will not be described in detail here, and should not be taken as a limitation of the present disclosure.

The above description of the camera embodiment is similar to the description of the above method embodiment and has similar beneficial effects as the method embodiment. Technical details not disclosed in the camera embodiments of the present disclosure will be understood by those skilled in the art with reference to the description of the method embodiments of the present disclosure. Elaborations are omitted herein.

Embodiments of the present disclosure further provide an application terminal, which may include a camera in one or more of the above exemplary embodiments.

In an exemplary embodiment, taking the application terminal as a camera or the application terminal including a camera as an example, the camera may include, but is not limited to, any one or more of a telescopic component, a color changeable component, a rotatable component, and a switchable component. Here, no limitation is made thereto in embodiments of the present disclosure.

In an exemplary embodiment, the camera may further include a housing and a camera body.

In an embodiment, taking a case that the application terminal is a camera or the application terminal includes a camera, and the camera may include a telescopic component and a color changeable component as an example, the terminal form of the application terminal may include, but is not limited to, any one or more of a telescopic state of the telescopic component and a color of the color changeable component. Here, no limitation is made thereto in embodiments of the present disclosure.

In an exemplary embodiment, taking a case that the application terminal is a camera or the application terminal includes a camera, and the camera may include a telescopic component, a color changeable component, a rotatable component, and a switchable component as an example, the terminal form includes any one or more of a telescopic state of the telescopic component, a color of the color changeable component, an angle of the camera, an angle of the rotatable component, and a switching state of the switchable component. Here, no limitation is made thereto in embodiments of the present disclosure.

The embodiment of the present disclosure further provides an application terminal. The application terminal may include a processor and a memory storing a computer program that is runnable on the processor, wherein acts of the method for controlling an application terminal in one or more of the above exemplary embodiments are implemented when the processor executes the program.

In an exemplary embodiment, as shown in FIG. 12, the application terminal 1200 may include at least one processor 1201; and at least one memory 1202, a bus 1203 and a camera 1204 connected to the processor 1201; herein, the processor 1201, the memory 1202 and the camera 1204 communicate with each other through the bus 1203; the processor 1201 is configured to invoke program instructions in the memory 1202 to perform acts of a method for controlling an application terminal in one or more of the above-described exemplary embodiments.

In an exemplary embodiment, the above processor may be a Central Processing Unit (CPU), other general purpose processor, Digital Signal Processor (DSP), Field Programmable Gate Array (FPGA) or other programmable logic device, discrete gate or transistor logic device, discrete hardware component, application specific integrated circuit, etc. The general-purpose processor may be a microprocessor (such as Micro Processor Unit (MPU)) or any conventional processor. Here, no limitation is made thereto in embodiments of the present disclosure.

In an exemplary embodiment, the memory may include non-permanent memory in a computer-readable storage medium, Random Access Memory (RAM) or non-volatile memory, etc., such as Read Only Memory (ROM) or Flash RAM, and the memory includes at least one memory chip. Here, no limitation is made thereto in embodiments of the present disclosure.

In an exemplary embodiment, in addition to a data bus, the bus may include a power bus, a control bus, a status signal bus, and the like. However, for clarity of illustration, various buses are labeled as the bus 1203 in FIG. 12. Here, no limitation is made thereto in embodiments of the present disclosure.

In an implementation process, the processing performed by the application terminal may be completed by an integrated logic circuit of hardware in the processor or instructions in the form of software. That is, the acts of the method in the embodiments of the present disclosure may be embodied as executed and completed by a hardware processor, or executed and completed by a combination of hardware in the processor and a software module. The software module may be located in a storage medium such as a random access memory, a flash memory, a read only memory, a programmable read-only memory, or an electrically erasable programmable memory, or a register, etc. The storage medium is located in the memory, and the processor reads information in the memory and completes the acts of the foregoing methods in combination with hardware thereof. In order to avoid repetition, detailed description is not provided herein.

Embodiments of the present disclosure further provide a computer-readable storage medium including a stored program, wherein a device on which the storage medium is located is controlled to execute acts of the method for controlling an application terminal in one or more of the above exemplary embodiments when the program is run.

In an exemplary embodiment, the above computer-readable storage medium may include, but are not limited to, the use of: ROM/RAM, magnetic disk or optical disk or the like. Here, no limitation is made thereto in embodiments of the present disclosure.

The above description of the embodiments of the application terminal or computer readable storage medium is similar to the description of the above embodiments of the method, and has similar advantages. Technical details not disclosed in embodiments of the application terminal or computer readable storage medium of the present disclosure will be understood by those skilled in the art with reference to the description of embodiments of the method of the present disclosure. Elaborations are omitted herein.

It may be understood by those of ordinary skills in the art that all or some acts in a method and function modules/units in a system and an apparatus disclosed above may be implemented as software, firmware, hardware, and appropriate combinations thereof. In a hardware implementation, division of the function modules/units mentioned in the above description is not always corresponding to division of physical components. For example, a physical component may have multiple functions, or a function or an act may be executed by several physical components in cooperation. Some components or all components may be implemented as software executed by a processor such as a digital signal processor or a microprocessor, or implemented as hardware, or implemented as an integrated circuit such as an application specific integrated circuit. Such software may be distributed in a computer-readable medium, and the computer-readable medium may include a computer storage medium (or a non-transitory medium) and a communication medium (or a transitory medium). As known to those of ordinary skill in the art, a term computer storage medium includes volatile and nonvolatile, removable and irremovable media implemented in any method or technology for storing information (for example, computer-readable instructions, a data structure, a program module, or other data). The computer storage medium includes, but is not limited to, a Random Access Memory (RAM), a Read Only Memory (ROM), an Electrically Erasable Programmable Read Only Memory (EEPROM), a Flash RAM, or other memory technologies, a Compact Disc Read Only Memory (CD-ROM), a Digital Versatile Disk (DVD) or other optical disk storages, a magnetic box, a magnetic tape, magnetic disk storage or other magnetic storage apparatuses, or any other media that may be used for storing desired information and may be accessed by a computer. In addition, it is known to those of ordinary skill in the art that the communication medium usually includes computer-readable instructions, a data structure, a program module, or other data in a modulated data signal, such as, a carrier or other transmission mechanisms, and may include any information delivery medium.

## Claims

1. A method for controlling an application terminal, comprising:
acquiring (21) target information based on a determination that a working mode of the application terminal is a first mode;
determining (22) whether the working mode of the application terminal meets a preset switching condition on the basis of the target information; and
controlling (23) the working mode of the application terminal to switch from the first mode to a second mode different from the first mode, if the working mode of the application terminal meets the preset switching condition, wherein the working mode comprises a terminal form,
wherein the application terminal comprises: a camera, the camera comprises: a housing, a camera body, and a telescopic component, and the terminal form comprises: a first terminal form corresponding to a non-privacy protection mode, and a second terminal form corresponding to a privacy protection mode;
wherein the first terminal form refers to a form in which the telescopic component is in an extended state and at least part of the camera body is located outside the housing, and the second terminal form refers to a form in which the telescopic component is in a contracted state and the camera body is located inside the housing; and
**characterized in that**
the camera further comprises: a color changeable component, which has a same color as surrounding environment of the camera in the first terminal form and in the second terminal form; or, the color of the color changeable component is different from the color of the surrounding environment of the camera in the first terminal form, and the color of the color changeable component is the same as the color of the surrounding environment of the camera in the second terminal form.

2. The method according to claim 1, wherein:
the first mode is one of a non-privacy protection mode and a privacy protection mode, and the second mode is the other of the non-privacy protection mode and the privacy protection mode, wherein a level of privacy security of the privacy protection mode is higher than a level of privacy security of the non-privacy protection mode; and
controlling (23) the working mode of the application terminal to switch from the first mode to the second mode different from the first mode comprises controlling (231) the working mode of the application terminal to switch from the non-privacy protection mode to the privacy protection mode, or controlling (232) the working mode of the application terminal to switch from the privacy protection mode to the non-privacy protection mode.

3. The method according to claim 2, wherein:
the terminal form comprises a privacy protection form and a non-privacy protection form, the networking mode comprises an external network connection mode and a local connection mode, and the running function comprises a privacy protection function and a non-privacy protection function; and
controlling the working mode of the application terminal to switch from the non-privacy protection mode to the privacy protection mode comprises any one or more of controlling (2311) the terminal form of the application terminal to be in the privacy protection mode, controlling the networking mode of the application terminal to be in the local connection mode, and controlling the running function of the application terminal to be in the privacy protection function, to allow the working mode of the application terminal to be in the privacy protection mode; or,
controlling (2321) the working mode of the application terminal to switch from the privacy protection mode to the non-privacy protection mode comprises any one or more of controlling the terminal form of the application terminal to be in the non-privacy protection form, controlling the networking mode of the application terminal to be in the external network connection mode, and controlling the running function of the application terminal to be in the non-privacy protection function, to allow the working mode of the application terminal to be in the non-privacy protection mode.

4. The method according to claim 1, wherein:
the first mode is one of an independent running mode and a human-computer interaction mode, and the second mode is the other of the independent running mode and the human-computer interaction mode, wherein a level of interaction of the human-computer interaction mode is higher than a level of interaction of the independent running mode; and
controlling the working mode of the application terminal to switch from the first mode to a second mode different from the first mode comprises: controlling (233) the working mode of the application terminal to switch from the independent running mode to the human-computer interaction mode, or controlling (234) the working mode of the application terminal to switch from the human-computer interaction mode to the independent running mode.

5. The method according to claim 4, wherein:
the terminal form comprises an independent running form and a human-computer interaction form, the networking mode comprises an external network connection mode and a local connection mode, and the running function comprises a human-computer interaction function and a non-human-computer interaction function; and
controlling the working mode of the application terminal to switch from the independent running mode to the human-computer interaction mode comprises any one or more of:
controlling (2331)) the terminal form of the application terminal to be in the human-computer interaction form;
controlling the networking mode of the application terminal to be in the local connection mode; and
controlling the running function of the application terminal to be in the human-computer interaction function,
to allow the working mode of the application terminal to be in the human-computer interaction mode; or,
controlling (2341) the working mode of the application terminal to switch from the human-computer interaction mode to the independent running mode comprises any one or more of: controlling the terminal form of the application terminal to be in the independent running form, controlling the networking mode of the application terminal to be in the external network connection mode, and controlling the running function of the application terminal to be in the non-human-computer interaction function, to allow the working mode of the application terminal to be in the independent running mode.

6. The method according to claim 1, wherein the target information comprises: any one or more of a first information of at least one mobile terminal connected to the application terminal and a second information acquired by the application terminal, wherein the first information comprises any one or more of identification information of the at least one mobile terminal, position information of the at least one mobile terminal and distance information between the at least one mobile terminal and the application terminal; and the second information comprises one or more of image information of environment in which the application terminal is located and state information of a user.

7. The method according to claim 1, wherein:
the target information comprises: identification information of at least one mobile terminal connected to the application terminal, the identification information comprising: any one or more of a terminal name, a media access control (MAC) address, and a unique identifier; and
determining whether the working mode of the application terminal meets the preset switching condition on the basis of the target information comprises: determining whether the working mode of the application terminal meets the preset switching condition based on whether the identification information of the at least one mobile terminal matches a preset terminal list, wherein the preset terminal list comprises at least one first preset identification information for indicating a set terminal or second preset identification information for indicating an arbitrary terminal.

8. The method according to claim 7, wherein determining whether the working mode of the application terminal meets the preset switching condition on the basis of the target information further comprises:
if the identification information of the at least one mobile terminal matches the first preset identification information, or if the second preset identification information exists in the preset terminal list, which indicates that the identification information of the at least one mobile terminal matches the preset terminal list, determining that the working mode of the application terminal meets the preset switching condition.

9. The method according to claim 1, wherein:
the target information comprises: a distance information between at least one mobile terminal connected to the application terminal and the application terminal; and
determining whether the working mode of the application terminal meets the preset switching condition on the basis of the target information comprises: determining whether the working mode of the application terminal meets the preset switching condition based on whether the distance information is less than a preset threshold.

10. The method according to claim 9, wherein determining whether the working mode of the application terminal meets a preset switching condition on the basis of the target information further comprises:
if the distance information is less than the preset threshold, determining that the working mode of the application terminal meets the preset switching condition.

11. The method according to claim 1, wherein:
the target information comprises: position information of at least one mobile terminal connected to the application terminal; and
determining whether the working mode of the application terminal meets the preset switching condition on the basis of the target information comprises: determining whether the working mode of the application terminal meets the preset switching condition based on whether the position information of the at least one mobile terminal is located in a preset area.

12. The method according to claim 11, wherein determining whether the working mode of the application terminal meets the preset switching condition on the basis of the target information further comprises:
if the position information of the at least one mobile terminal is located in the preset area, determining that the working mode of the application terminal meets the preset switching condition.

13. The method according to claim 1, wherein:
the target information comprises: image information of environment in which the application terminal is located;
determining whether the working mode of the application terminal meets the preset switching condition on the basis of the target information comprises:
determining whether a first target user or a second target user is located in the environment in which the application terminal is located based on whether pre-stored image information of the first target user or pre-stored image information of the second target user exists in the image information of the environment in which the application terminal is located; and
based on whether the first target user or the second target user is located in the environment in which the application terminal is located, determining whether the working mode of the application terminal meets the preset switching condition, and the second target user is different from the first target user.

14. The method according to claim 13, wherein determining whether the working mode of the application terminal meets the preset switching condition on the basis of the target information further comprises:
if the image information of the first target user does not exist in the image information of the environment in which the application terminal is located, determining that the first target user is not located in the environment in which the application terminal is located, and determining that the working mode of the application terminal meets the preset switching condition; or,
if the image information of the second target user exists in the image information of the environment where the application terminal is located, determining that the second target user is located in the environment where the application terminal is located, and determining that the working mode of the application terminal meets the preset switching condition.

15. An application terminal, configured to implement the method according to any one of claims 1 to 14.

## Patentansprüche

1. Verfahren zur Steuerung eines Anwendungsendgeräts, umfassend:
das Erwerben (21) von Zielinformation basierend auf einer Bestimmung, dass ein Arbeitsmodus des Anwendungsendgeräts ein erster Modus ist;
das Bestimmen (22), ob der Arbeitsmodus des Anwendungsendgeräts eine vorgegebene Schaltbedingung basierend auf der Zielinformation erfüllt; und
das Steuern (23) des Arbeitsmodus des Anwendungsendgeräts, um vom ersten Modus zu einem zweiten Modus, welcher verschieden vom ersten Modus ist, zu schalten, wenn der Arbeitsmodus des Anwendungsendgeräts die vorgegebene Schaltbedingung erfüllt, wobei der Arbeitsmodus eine Endgerätform umfasst,
wobei das Anwendungsendgerät Folgendes umfasst: eine Kamera, die Kamera Folgendes umfasst: ein Gehäuse, einen Kamerakörper und einen teleskopischen Bestandteil, und die Endgerätform Folgendes umfasst: eine erste Endgerätform entsprechend einem Nicht-Privatsphärenschutzmodus und eine zweite Endgerätform entsprechend einem Privatsphärenschutzmodus;
wobei die erste Endgerätform eine Form betrifft, in welcher der teleskopische Bestandteil in einem ausgezogenen Zustand ist und sich mindestens ein Teil des Kamerakörpers außerhalb des Gehäuses befindet, und die zweite Endgerätform eine Form betrifft, in welcher der teleskopische Bestandteil in einem zusammengezogenen Zustand ist und sich der Kamerakörper innerhalb des Gehäuses befindet; und
**dadurch gekennzeichnet, dass**
die Kamera zusätzlich Folgendes umfasst: einen farblich wechselbaren Bestandteil, welcher die gleiche Farbe als die umliegende Umgebung der Kamera in der ersten Endgerätform und in der zweiten Endgerätform aufweist; oder die Farbe des farblich wechselbaren Bestandteils verschieden von der Farbe der umliegenden Umgebung der Kamera in der ersten Endgerätform ist, und die Farbe des farblich wechselbaren Bestandteils die gleiche als die Farbe der umliegenden Umgebung der Kamera in der zweiten Endgerätform ist.

2. Verfahren nach Anspruch 1, wobei:
der erste Modus einer aus einem Nicht-Privatsphärenschutzmodus und einem Privatsphärenschutzmodus ist, und der zweite Modus der andere des Nicht-Privatsphärenschutzmodus und des Privatsphärenschutzmodus ist, wobei ein Niveau von Privatsphärensicherheit des Privatsphärenschutzmodus höher als ein Niveau von Privatsphärensicherheit des Nicht-Privatsphärenschutzmodus ist; und
das Steuern (23) des Arbeitsmodus des Anwendungsendgeräts, um vom ersten Modus zum zweiten Modus, welcher verschieden vom ersten Modus ist, zu schalten, das Steuern (231) des Arbeitsmodus des Anwendungsendgeräts, um vom Nicht-Privatsphärenschutzmodus zum Privatsphärenschutzmodus zu schalten, oder das Steuern (232) des Arbeitsmodus des Anwendungsendgeräts, um vom Privatsphärenschutzmodus zum Nicht-Privatsphärenschutzmodus zu schalten, umfasst.

3. Verfahren nach Anspruch 2, wobei:
die Endgerätform eine Privatsphärenschutzform und eine Nicht-Privatsphärenschutzform umfasst, der Vernetzungsmodus einen äußeren Netzverbindungsmodus und einen lokalen Verbindungsmodus umfasst, und die Lauffunktion eine Privatsphärenschutzfunktion und eine Nicht-Privatsphärenschutzfunktion umfasst; und
das Steuern des Arbeitsmodus des Anwendungsendgeräts, um vom Nicht-Privatsphärenschutzmodus zum Privatsphärenschutzmodus zu schalten, irgendeins oder mehrere aus dem Steuern (2311) der Endgerätform des Anwendungsendgeräts, um im Privatsphärenschutzmodus zu sein, dem Steuern des Vernetzungsmodus des Anwendungsendgeräts, um im lokalen Verbindungsmodus zu sein, und dem Steuern der Lauffunktion des Anwendungsendgeräts, um in der Privatsphärenschutzfunktion zu sein, umfasst, um dem Arbeitsmodus des Anwendungsendgeräts zu erlauben, im Privatsphärenschutzmodus zu sein; oder
das Steuern (2321) des Arbeitsmodus des Anwendungsendgeräts, um vom Privatsphärenschutzmodus zum Nicht-Privatsphärenschutzmodus zu schalten, irgendeins oder mehrere aus dem Steuern der Endgerätform des Anwendungsendgeräts, um in der Nicht-Privatsphärenschutzform zu sein, dem Steuern des Vernetzungsmodus des Anwendungsendgeräts, um im äußeren Netzverbindungsmodus zu sein, und dem Steuern der Lauffunktion des Anwendungsendgeräts, um in der Nicht-Privatsphärenschutzfunktion zu sein, umfasst, um dem Arbeitsmodus des Anwendungsendgeräts zu erlauben, im Nicht-Privatsphärenschutzmodus zu sein.

4. Verfahren nach Anspruch 1, wobei:
der erste Modus einer aus einem unabhängigen Laufmodus und einem Mensch-Computer-Interaktionsmodus ist, und der zweite Modus der andere aus dem unabhängigen Laufmodus und dem Mensch-Computer-Interaktionsmodus ist, wobei ein Interaktionsniveau des Mensch-Computer-Interaktionsmodus höher als ein Interaktionsniveau des unabhängigen Laufmodus ist; und
das Steuern des Arbeitsmodus des Anwendungsendgeräts, um vom ersten Modus zu einem zweiten Modus, welcher verschieden vom ersten Modus ist, zu schalten, Folgendes umfasst: das Steuern (233) des Arbeitsmodus des Anwendungsendgeräts, um vom unabhängigen Laufmodus zum Mensch-Computer-Interaktionsmodus zu schalten, oder das Steuern (234) des Arbeitsmodus des Anwendungsendgeräts, um vom Mensch-Computer-Interaktionsmodus zum unabhängigen Laufmodus zu schalten.

5. Verfahren nach Anspruch 4, wobei:
die Endgerätform eine unabhängige Laufform und eine Mensch-Computer-Interaktionsform umfasst, der Vernetzungsmodus einen äußeren Netzverbindungsmodus und einen lokalen Verbindungsmodus umfasst, und die Lauffunktion eine Mensch-Computer-Interaktionsfunktion und eine Nicht-Mensch-Computer-Interaktionsfunktion umfasst; und
das Steuern des Arbeitsmodus des Anwendungsendgeräts, um vom unabhängigen Laufmodus zum Mensch-Computer-Interaktionsmodus zu schalten, irgendeins oder mehrere aus den Folgenden umfasst:
das Steuern (2331) der Endgerätform des Anwendungsendgeräts, um in der Mensch-Computer-Interaktionsform zu sein;
das Steuern des Vernetzungsmodus des Anwendungsendgeräts, um im lokalen Verbindungsmodus zu sein; und
das Steuern der Lauffunktion des Anwendungsendgeräts, um in der Mensch-Computer-Interaktionsfunktion zu sein,
um dem Arbeitsmodus des Anwendungsendgeräts zu erlauben, im Mensch-Computer-Interaktionsmodus zu sein; oder
das Steuern (2341) des Arbeitsmodus des Anwendungsendgeräts, um vom Mensch-Computer-Interaktionsmodus zum unabhängigen Laufmodus zu schalten, irgendeins oder mehrere aus den Folgenden umfasst: das Steuern der Endgerätform des Anwendungsendgeräts, um in der unabhängigen Laufform zu sein, das Steuern des Vernetzungsmodus des Anwendungsendgeräts, um im äußeren Netzverbindungsmodus zu sein, und das Steuern der Lauffunktion des Anwendungsendgeräts, um in der Nicht-Mensch-Computer-Interaktionsfunktion zu sein, um dem Arbeitsmodus des Anwendungsendgeräts zu erlauben, im unabhängigen Laufmodus zu sein.

6. Verfahren nach Anspruch 1, wobei die Zielinformation Folgendes umfasst: irgendeine oder mehrere aus einer ersten Information von mindestens einem mobilen Endgerät, welches mit dem Anwendungsendgerät verbunden ist, und eine zweite Information, welche vom Anwendungsendgerät erworben wurde, wobei die erste Information irgendeine oder mehrere aus Identifizierungsinformation des mindestens einen mobilen Endgeräts, Positionsinformation des mindestens einen mobilen Endgeräts und Abstandsinformation zwischen dem mindestens einen mobilen Endgerät und dem Anwendungsendgerät umfasst; und die zweite Information eine oder mehrere aus Bildinformation aus der Umgebung, in welcher sich das Anwendungsendgerät befindet, und Zustandsinformation eines Benutzers umfasst.

7. Verfahren nach Anspruch 1, wobei:
die Zielinformation Folgendes umfasst: Identifizierungsinformation aus mindestens einem mobilen Endgerät, welches mit dem Anwendungsendgerät verbunden ist, wobei die Identifizierungsinformation Folgendes umfasst: irgendeins oder mehrere aus einem Endgerätnamen, einer Medienzugriffskontrolle (MAC)-Adresse und einem eindeutigen Kennzeichner; und
das Bestimmen, ob der Arbeitsmodus des Anwendungsendgeräts die vorgegebene Schaltbedingung basierend auf der Zielinformation erfüllt, Folgendes umfasst: das Bestimmen, ob der Arbeitsmodus des Anwendungsendgeräts die vorgegebene Schaltbedingung basierend darauf, ob die Identifizierungsinformation des mindestens einen mobilen Endgeräts mit einer vorgegebenen Endgeräteliste übereinstimmt, erfüllt, wobei die vorgegebene Endgeräteliste mindestens eine erste vorgegebene Identifizierungsinformation zum Anzeigen eines gegebenen Endgeräts oder eine zweite vorgegebene Identifizierungsinformation zum Anzeigen eines beliebigen Endgeräts umfasst.

8. Verfahren nach Anspruch 7, wobei das Bestimmen, ob der Arbeitsmodus des Anwendungsendgeräts die vorgegebene Schaltbedingung basierend auf der Zielinformation erfüllt, zusätzlich Folgendes umfasst:
wenn die Identifizierungsinformation des mindestens einen mobilen Endgeräts mit der ersten vorgegebenen Identifizierungsinformation übereinstimmt, oder, wenn die zweite vorgegebene Identifizierungsinformation in der vorgegebenen Endgeräteliste existiert, was anzeigt, dass die Identifizierungsinformation des mindestens einen mobilen Endgeräts mit der vorgegebenen Endgeräteliste übereinstimmt, das Bestimmen, dass der Arbeitsmodus des Anwendungsendgeräts die vorgegebene Schaltbedingung erfüllt.

9. Verfahren nach Anspruch 1, wobei:
die Zielinformation Folgendes umfasst: eine Abstandsinformation zwischen mindestens einem mobilen Endgerät, welches mit dem Anwendungsendgerät verbunden ist, und dem Anwendungsendgerät; und
das Bestimmen, ob der Arbeitsmodus des Anwendungsendgeräts die vorgegebene Schaltbedingung basierend auf der Zielinformation erfüllt, Folgendes umfasst: das Bestimmen, ob der Arbeitsmodus des Anwendungsendgeräts die vorgegebene Schaltbedingung basierend darauf, ob die Abstandsinformation weniger als ein vorgegebener Schwellenwert ist, erfüllt.

10. Verfahren nach Anspruch 9, wobei das Bestimmen, ob der Arbeitsmodus des Anwendungsendgeräts eine vorgegebene Schaltbedingung basierend auf der Zielinformation erfüllt, zusätzlich Folgendes umfasst:
wenn die Abstandsinformation weniger als der vorgegebene Schwellenwert ist, das Bestimmen, dass der Arbeitsmodus des Anwendungsendgeräts die vorgegebene Schaltbedingung erfüllt.

11. Verfahren nach Anspruch 1, wobei:
die Zielinformation Folgendes umfasst: Positionsinformation aus mindestens einem mobilen Endgerät, welches mit dem Anwendungsendgerät verbunden ist; und
das Bestimmen, ob der Arbeitsmodus des Anwendungsendgeräts die vorgegebene Schaltbedingung basierend auf der Zielinformation erfüllt, Folgendes umfasst: das Bestimmen, ob der Arbeitsmodus des Anwendungsendgeräts die vorgegebene Schaltbedingung basierend darauf, ob sich die Positionsinformation des mindestens einen mobilen Endgeräts in einem vorgegebenen Bereich befindet, erfüllt.

12. Verfahren nach Anspruch 11, wobei das Bestimmen, ob der Arbeitsmodus des Anwendungsendgeräts die vorgegebene Schaltbedingung basierend auf der Zielinformation erfüllt, zusätzlich Folgendes umfasst:
wenn sich die Positionsinformation des mindestens einen mobilen Endgeräts im vorgegebenen Bereich befindet, das Bestimmen, dass der Arbeitsmodus des Anwendungsendgeräts die vorgegebene Schaltbedingung erfüllt.

13. Verfahren nach Anspruch 1, wobei:
die Zielinformation Folgendes umfasst: Bildinformation aus der Umgebung, in welcher sich das Anwendungsendgerät befindet;
das Bestimmen, ob der Arbeitsmodus des Anwendungsendgeräts die vorgegebene Schaltbedingung basierend auf der Zielinformation erfüllt, Folgendes umfasst:
das Bestimmen, ob sich ein erster Zielbenutzer oder ein zweiter Zielbenutzer in der Umgebung befindet, in welcher sich das Anwendungsendgerät befindet, basierend darauf, ob vorgespeicherte Bildinformation des ersten Zielbenutzers oder vorgespeicherte Bildinformation des zweiten Zielbenutzers in der Bildinformation der Umgebung existiert, in welcher sich das Anwendungsendgerät befindet; und
basierend darauf, ob sich der erste Zielbenutzer oder der zweite Zielbenutzer in der Umgebung befindet, in welcher sich das Anwendungsendgerät befindet, das Bestimmen, ob der Arbeitsmodus des Anwendungsendgeräts die vorgegebene Schaltbedingung erfüllt, und der zweite Zielbenutzer verschieden vom ersten Zielbenutzer ist.

14. Verfahren nach Anspruch 13, wobei das Bestimmen, ob der Arbeitsmodus des Anwendungsendgeräts die vorgegebene Schaltbedingung basierend auf der Zielinformation erfüllt, zusätzlich Folgendes umfasst:
wenn die Bildinformation des ersten Zielbenutzers nicht in der Bildinformation der Umgebung existiert, in welcher sich das Anwendungsendgerät befindet, das Bestimmen, dass sich der erste Zielbenutzer nicht in der Umgebung befindet, in welcher sich das Anwendungsendgerät befindet, und das Bestimmen, dass der Arbeitsmodus des Anwendungsendgeräts die vorgegebene Schaltbedingung erfüllt; oder
wenn die Bildinformation des zweiten Zielbenutzers in der Bildinformation der Umgebung existiert, in welcher sich das Anwendungsendgerät befindet, das Bestimmen, dass sich der zweite Zielbenutzer in der Umgebung befindet, in welcher sich das Anwendungsendgerät befindet, und das Bestimmen, dass der Arbeitsmodus des Anwendungsendgeräts die vorgegebene Schaltbedingung erfüllt.

15. Anwendungsendgerät, welches dazu ausgebildet ist, das Verfahren nach einem der Ansprüche 1 bis 14 zu implementieren.

## Revendications

1. Procédé de commande d'un terminal d'application, comprenant :
l'acquisition (21) d'informations cibles sur la base d'une détermination qu'un mode de fonctionnement du terminal d'application est un premier mode ;
la détermination (22) si le mode de fonctionnement du terminal d'application satisfait à une condition de commutation prédéfinie sur la base des informations cibles ; et
la commande (23) du mode de fonctionnement du terminal d'application pour commuter du premier mode à un deuxième mode différent du premier mode, si le mode de fonctionnement du terminal d'application satisfait à la condition de commutation prédéfinie, dans lequel le mode de fonctionnement comprend une forme de terminal,
dans lequel le terminal d'application comprend : une caméra, la caméra comprend : un boîtier, un corps de caméra, et un composant télescopique, et la forme de terminal comprend : une première forme de terminal correspondant à un mode de non protection de la confidentialité, et une deuxième forme de terminal correspondant à un mode de protection de la confidentialité ;
dans lequel la première forme de terminal se réfère à une forme dans laquelle le composant télescopique est dans un état étendu et au moins une partie du corps de caméra est située à l'extérieur du boîtier, et la deuxième forme de terminal se réfère à une forme dans laquelle le composant télescopique est dans un état contracté et le corps de caméra est situé à l'intérieur du boîtier ; et
**caractérisé en ce que**
la caméra comprend en outre : un composant à changement de couleur, qui présente une même couleur que l'environnement environnant de la caméra dans la première forme de terminal et dans la deuxième forme de terminal ; ou, la couleur du composant à changement de couleur est différente de la couleur de l'environnement environnant de la caméra dans la première forme de terminal, et la couleur du composant à changement de couleur est la même que la couleur de l'environnement environnant de la caméra dans la deuxième forme de terminal.

2. Procédé selon la revendication 1, dans lequel :
le premier mode est l'un parmi un mode de non protection de la confidentialité et un mode de protection de la confidentialité, et le deuxième mode est l'autre parmi le mode de non protection de la confidentialité et le mode de protection de la confidentialité,
dans lequel un niveau de sécurité de confidentialité du mode de protection de la confidentialité est supérieur à un niveau de sécurité de confidentialité du mode de non protection de la confidentialité ; et
la commande (23) du mode de fonctionnement du terminal d'application pour commuter du premier mode au deuxième mode différent du premier mode comprend la commande (231) du mode de fonctionnement du terminal d'application pour commuter du mode de non protection de la confidentialité au mode de protection de la confidentialité, ou la commande (232) du mode de fonctionnement du terminal d'application pour commuter du mode de protection de la confidentialité au mode de non protection de la confidentialité.

3. Procédé selon la revendication 2, dans lequel :
la forme de terminal comprend une forme de protection de la confidentialité et une forme de non protection de la confidentialité, le mode de mise en réseau comprend un mode de connexion au réseau externe et un mode de connexion locale, et la fonction d'exécution comprend une fonction de protection de la confidentialité et une fonction de non protection de la confidentialité ; et
la commande du mode de fonctionnement du terminal d'application pour commuter du mode de non protection de la confidentialité au mode de protection de la confidentialité comprend l'un quelconque ou plusieurs parmi la commande (2311) de la forme de terminal du terminal d'application pour être dans le mode de protection de la confidentialité, la commande du mode de mise en réseau du terminal d'application pour être dans le mode de connexion locale, et la commande de la fonction d'exécution du terminal d'application pour être dans la fonction de protection de la confidentialité,
pour permettre au mode de fonctionnement du terminal d'application d'être dans le mode de protection de la confidentialité ; ou,
la commande (2321) du mode de fonctionnement du terminal d'application pour commuter du mode de protection de la confidentialité au mode de non protection de la confidentialité comprend l'un quelconque ou plusieurs parmi la commande de la forme de terminal du terminal d'application pour être dans la forme de non protection de la confidentialité, la commande du mode de mise en réseau du terminal d'application pour être dans le mode de connexion au réseau externe, et la commande de la fonction d'exécution du terminal d'application pour être dans la fonction de non protection de la confidentialité, pour permettre au mode de fonctionnement du terminal d'application d'être dans le mode de non protection de la confidentialité.

4. Procédé selon la revendication 1, dans lequel :
le premier mode est l'un parmi un mode d'exécution indépendant et un mode d'interaction homme-machine, et le deuxième mode est l'autre parmi le mode d'exécution indépendant et le mode d'interaction homme-machine, dans lequel un niveau d'interaction du mode d'interaction homme-machine est supérieur à un niveau d'interaction du mode d'exécution indépendant ; et
la commande du mode de fonctionnement du terminal d'application pour commuter du premier mode à un deuxième mode différent du premier mode comprend : la commande (233) du mode de fonctionnement du terminal d'application pour commuter du mode d'exécution indépendant au mode d'interaction homme-machine, ou la commande (234) du mode de fonctionnement du terminal d'application pour commuter du mode d'interaction homme-machine au mode d'exécution indépendant.

5. Procédé selon la revendication 4, dans lequel :
la forme de terminal comprend une forme d'exécution indépendante et une forme d'interaction homme-machine, le mode de mise en réseau comprend un mode de connexion au réseau externe et un mode de connexion locale, et la fonction d'exécution comprend une fonction d'interaction homme-machine et une fonction d'interaction non-homme-machine ; et
la commande du mode de fonctionnement du terminal d'application pour commuter du mode d'exécution indépendant au mode d'interaction homme-machine comprend l'un quelconque ou plusieurs parmi :
la commande (2331) de la forme de terminal du terminal d'application pour être dans la forme d'interaction homme-machine;
la commande du mode de mise en réseau du terminal d'application pour être dans le mode de connexion locale ; et
la commande de la fonction d'exécution du terminal d'application pour être dans la fonction d'interaction homme-machine, pour permettre au mode de fonctionnement du terminal d'application d'être dans le mode d'interaction homme-machine ; ou,
la commande (2341) du mode de fonctionnement du terminal d'application pour commuter du mode d'interaction homme-machine au mode d'exécution indépendant comprend l'un quelconque ou plusieurs parmi : la commande de la forme de terminal du terminal d'application pour être dans la forme d'exécution indépendante, la commande du mode de mise en réseau du terminal d'application pour être dans le mode de connexion au réseau externe, et la commande de la fonction d'exécution du terminal d'application pour être dans la fonction d'interaction non-homme-machine, pour permettre au mode de fonctionnement du terminal d'application d'être dans le mode d'exécution indépendant.

6. Procédé selon la revendication 1, dans lequel les informations cibles comprennent: l'une quelconque ou plusieurs parmi une première information d'au moins un terminal mobile connecté au terminal d'application et une deuxième information acquise par le terminal d'application, dans lequel la première information comprend l'une quelconque ou plusieurs parmi une information d'identification de l'au moins un terminal mobile, une information de position de l'au moins un terminal mobile et une information de distance entre l'au moins un terminal mobile et le terminal d'application ; et la deuxième information comprend l'une ou plusieurs parmi une information d'image de l'environnement dans lequel le terminal d'application est situé et une information d'état d'un utilisateur.

7. Procédé selon la revendication 1, dans lequel :
les informations cibles comprennent : une information d'identification d'au moins un terminal mobile connecté au terminal d'application, l'information d'identification comprenant : l'un quelconque ou plusieurs parmi un nom de terminal, une adresse de commande d'accès au support (MAC), et un identifiant unique ; et
la détermination si le mode de fonctionnement du terminal d'application satisfait à la condition de commutation prédéfinie sur la base des informations cibles comprend : la détermination si le mode de fonctionnement du terminal d'application satisfait à la condition de commutation prédéfinie sur la base du fait que l'information d'identification de l'au moins un terminal mobile correspond ou non à une liste de terminaux prédéfinie, dans lequel la liste de terminaux prédéfinie comprend au moins une première information d'identification prédéfinie pour indiquer un terminal défini ou une deuxième information d'identification prédéfinie pour indiquer un terminal arbitraire.

8. Procédé selon la revendication 7, dans lequel la détermination si le mode de fonctionnement du terminal d'application satisfait à la condition de commutation prédéfinie sur la base des informations cibles comprend en outre :
si l'information d'identification de l'au moins un terminal mobile correspond à la première information d'identification prédéfinie, ou si la deuxième information d'identification prédéfinie existe dans la liste de terminaux prédéfinie, ce qui indique que l'information d'identification de l'au moins un terminal mobile correspond à la liste de terminaux prédéfinie, la détermination que le mode de fonctionnement du terminal d'application satisfait à la condition de commutation prédéfinie.

9. Procédé selon la revendication 1, dans lequel :
les informations cibles comprennent : une information de distance entre au moins un terminal mobile connecté au terminal d'application et le terminal d'application ; et
la détermination si le mode de fonctionnement du terminal d'application satisfait à la condition de commutation prédéfinie sur la base des informations cibles comprend : la détermination si le mode de fonctionnement du terminal d'application satisfait à la condition de commutation prédéfinie sur la base du fait que l'information de distance est inférieure ou non à un seuil prédéfini.

10. Procédé selon la revendication 9, dans lequel la détermination si le mode de fonctionnement du terminal d'application satisfait à une condition de commutation prédéfinie sur la base des informations cibles comprend en outre :
si l'information de distance est inférieure au seuil prédéfini, la détermination que le mode de fonctionnement du terminal d'application satisfait à la condition de commutation prédéfinie.

11. Procédé selon la revendication 1, dans lequel :
les informations cibles comprennent : une information de position d'au moins un terminal mobile connecté au terminal d'application ; et
la détermination si le mode de fonctionnement du terminal d'application satisfait à la condition de commutation prédéfinie sur la base des informations cibles comprend : la détermination si le mode de fonctionnement du terminal d'application satisfait à la condition de commutation prédéfinie sur la base du fait que l'information de position de l'au moins un terminal mobile est située ou non dans une zone prédéfinie.

12. Procédé selon la revendication 11, dans lequel la détermination si le mode de fonctionnement du terminal d'application satisfait à la condition de commutation prédéfinie sur la base des informations cibles comprend en outre :
si l'information de position de l'au moins un terminal mobile est située dans la zone prédéfinie, la détermination que le mode de fonctionnement du terminal d'application satisfait à la condition de commutation prédéfinie.

13. Procédé selon la revendication 1, dans lequel :
les informations cibles comprennent : une information d'image de l'environnement dans lequel le terminal d'application est situé ;
la détermination si le mode de fonctionnement du terminal d'application satisfait à la condition de commutation prédéfinie sur la base des informations cibles comprend :
la détermination si un premier utilisateur cible ou un deuxième utilisateur cible est situé dans l'environnement dans lequel le terminal d'application est situé sur la base du fait qu'une information d'image pré-stockée du premier utilisateur cible ou une information d'image pré-stockée du deuxième utilisateur cible existe ou non dans l'information d'image de l'environnement dans lequel le terminal d'application est situé ; et
sur la base du fait que le premier utilisateur cible ou le deuxième utilisateur cible est situé dans l'environnement dans lequel le terminal d'application est situé, la détermination si le mode de fonctionnement du terminal d'application satisfait à la condition de commutation prédéfinie, et le deuxième utilisateur cible est différent du premier utilisateur cible.

14. Procédé selon la revendication 13, dans lequel la détermination si le mode de fonctionnement du terminal d'application satisfait à la condition de commutation prédéfinie sur la base des informations cibles comprend en outre :
si l'information d'image du premier utilisateur cible n'existe pas dans l'information d'image de l'environnement dans lequel le terminal d'application est situé, la détermination que le premier utilisateur cible n'est pas situé dans l'environnement dans lequel le terminal d'application est situé, et la détermination que le mode de fonctionnement du terminal d'application satisfait à la condition de commutation prédéfinie ; ou,
si l'information d'image du deuxième utilisateur cible existe dans l'information d'image de l'environnement où le terminal d'application est situé, la détermination que le deuxième utilisateur cible est situé dans l'environnement où le terminal d'application est situé, et la détermination que le mode de fonctionnement du terminal d'application satisfait à la condition de commutation prédéfinie.

15. Terminal d'application, configuré pour mettre en œuvre le procédé selon l'une quelconque des revendications 1 à 14.
